(19) **Europäisches Patentamt / European Patent Office / Office européen des brevets**

(11) **EP 4 782 399 A1**

(12) # EUROPEAN PATENT APPLICATION
published in accordance with Art. 153(4) EPC

(43) Date of publication:
29.07.2026 Bulletin 2026/31

(21) Application number: 24868730.3

(22) Date of filing: 20.09.2024

(51) International Patent Classification (IPC):
$C01B\ 32/168^{(2017.01)}$   $C01B\ 32/174^{(2017.01)}$
$H01M\ 4/62^{(2006.01)}$   $C01B\ 32/194^{(2017.01)}$
$H01G\ 11/32^{(2013.01)}$   $H01G\ 11/26^{(2013.01)}$
$H01G\ 11/86^{(2013.01)}$   $H01G\ 11/58^{(2013.01)}$

(52) Cooperative Patent Classification (CPC):
C01B 32/168; C01B 32/174; C01B 32/194;
H01G 11/26; H01G 11/32; H01G 11/58;
H01G 11/86; H01M 4/62

(86) International application number:
PCT/KR2024/014223

(87) International publication number:
WO 2025/063754 (27.03.2025 Gazette 2025/13)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.09.2023 KR 20230126510
09.09.2024 KR 20240122668

(71) Applicant: **POSTECH Research and Business
Development
Foundation
Pohang-si, Gyeongsangbuk-do 37673 (KR)**

(72) Inventors:
• **OH, Seung Soo**
 **Pohang-si, Gyeongsangbuk-do 37673 (KR)**
• **CHEON, Soomin**
 **Pohang-si, Gyeongsangbuk-do 37673 (KR)**
• **YI, Gi-Ra**
 **Pohang-si, Gyeongsangbuk-do 37673 (KR)**
• **HUH, Yoo Jeong**
 **Pohang-si, Gyeongsangbuk-do 37673 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **METHOD FOR WETTABILITY MODIFICATION OF CARBON ALLOTROPES AND
WETTABILITY-MODIFIED CARBON ALLOTROPES THEREOF**

(57) The present invention relates to a method for modifying wettability of a carbon allotrope, the method comprising: preparing a carbon allotrope; preparing a solvent capable of inducing generation of a hydrophilic radical or a hydrophobic radical; contacting the carbon allotrope with the solvent; supplying energy to the solvent using an energy source; and generating a hydrophilic radical or a hydrophobic radical from the solvent through the energy supplied to the solvent, such that the generated radical is bonded to an end of the carbon allotrope.

【Fig. 1】

**Description**

**[TECHNICAL FIELD]**

The present invention relates to a wettability modification of a carbon allotrope and a wettability-modified carbon allotrope using the same.

**[BACKGROUND ART]**

Supercapacitors are broadly classified into pseudocapacitors and electric double-layer capacitors (EDLC) according to energy storage methods. A pseudocapacitor stores energy by a redox reaction at the interface between an electrode and an electrolyte, and a metal oxide or a conductive polymer is mainly used as an electrode material. An electric double-layer capacitor is used as an energy storage device that develops capacitance by forming a double layer between an electrode and an electrolyte by disposing a separator with excellent insulation between a pair of polarizable electrodes made of a carbon material.

Electric double-layer capacitors are widely used in small and lightweight electrochemical energy storage devices along with batteries due to high power capability and high-capacity energy storage capability. Furthermore, due to the use of environmentally friendly materials, long life, and high charge/discharge efficiency among various energy storage devices, the utilization of electric double-layer capacitors, whose technical importance is emerging from environmental and economic perspectives, is expected to be used as a power supply device for high-value equipment such as military, aerospace, medical, and hybrid electric vehicles (HEV).

Graphene has recently been widely used as a material for electric double-layer capacitor electrodes, and graphene has excellent electrical, mechanical, physical, and chemical properties as a two-dimensional sheet structure. In particular, it is known as a suitable material for electric double-layer capacitors because it has a high specific surface area and excellent electrical conductivity.

However, two-dimensional graphene may have a problem of deteriorating the excellent properties of graphene due to the occurrence of aggregation and restacking phenomena caused by strong n-bonds between graphene sheets. Accordingly, the development of an electric double-layer capacitor using a non-polar ionic liquid electrolyte is required to secure safety while having a wide voltage range, and the development of an electric double-layer capacitor using a polar aqueous electrolyte is required to increase cost-efficiency with long cycle life and high ionic conductivity.

In this process, appropriately adjusting the wettability for graphene, which is an active material used in an electrode, to match the degree of polarity with the electrolyte helps to improve the charge storage capability and rate performance of the electric double-layer capacitor. This can increase the surface area accessible to electrolyte ions to the electrode by introducing an active material with excellent wettability for the electrolyte, thereby promoting ion diffusion within the electrode.

As described above, the technology for controlling the wettability of graphene can be utilized to maximize the performance of a device utilizing graphene and fluids with various degrees of polarity. In particular, it is expected to be applicable to various fields such as energy storage devices including not only supercapacitors but also secondary batteries and fuel cells, sensors, and microfluidic transportation devices.

Meanwhile, as technology development and demand for mobile devices have recently increased, the demand for secondary batteries as an energy source is rapidly increasing. Among secondary batteries, lithium secondary batteries having high energy density and voltage, long cycle life, and low self-discharge rate have been commercialized and widely used. Generally, a high-density electrode is formed by molding electrode active material particles having a size of several $\mu$m to several tens of $\mu$m by a high-pressure press, so that particles are deformed, spaces between particles are reduced, and electrolyte permeability is likely to be deteriorated.

In order to solve such a problem, a conductive additive is used along with excellent electrical conductivity during the manufacture of an electrode. When a conductive additive is used during the manufacture of an electrode, the conductive additive is dispersed between compressed electrode active materials to maintain micropores between the active material particles, so that the penetration of the electrolyte is easy, and resistance in the electrode can be reduced due to excellent conductivity. In addition, carbon black has been mainly used as a conductive additive, but recently, the use of carbon-based conductive additives such as carbon nanofibers, carbon nanotubes, and planar graphene, which can further reduce electrode resistance by forming an electrical conduction path in the electrode, is increasing.

However, carbon nanofibers and carbon nanotubes have an advantage of excellent electrical conductivity, but have a disadvantage that dispersion is difficult due to the characteristics of the material itself. In order to solve such a problem, a method for improving the dispersibility of carbon nanofibers using various dispersants has been proposed, but when carbon nanofibers are dispersed in a dispersion medium at a high concentration, a problem that handling is difficult due to an increase in viscosity may occur.

In addition, carbon nanotubes have hydrophobic characteristics, so that an aggregation phenomenon occurs when mixed with a polar organic solvent or water. In addition, the aggregation phenomenon is intensified due to the Van der Waals force and pi-pi stacking phenomenon acting between the carbon nanotubes, so that the dispersibility in an organic solvent can be greatly deteriorated. Accordingly, a method of modifying carbon nanotubes by introducing a dispersant such as PVP (Polyvinylpyrrolidone) in order to increase the dispersibility of carbon nanotubes and solvents has been attempted, but when the method is introduced into an electrode, it includes a dispersant which is an insulating material together, so that a problem of lowering the electronic conductivity of the electrode may occur.

Accordingly, there is a need for research on a carbon material having excellent electrical conductivity and improved dispersion stability while controlling the wettability of the carbon material according to the electrolyte polarity.

## [CONTENTS OF THE INVENTION]

### [TECHNICAL PROBLEM]

One object of the present invention is to provide a method for modifying the wettability of a carbon allotrope using an energy source.

Another object of the present invention is to provide a wettability-modified carbon allotrope having excellent electrical conductivity and improved dispersion stability.

### [TECHNICAL SOLUTION]

A method for modifying wettability of a carbon allotrope according to an embodiment of the present invention comprises: preparing a carbon allotrope; preparing a solvent capable of inducing generation of a hydrophilic radical or a hydrophobic radical; contacting the carbon allotrope with the solvent; supplying energy to the solvent using an energy source; and generating a hydrophilic radical or a hydrophobic radical from the solvent through the energy supplied to the solvent, such that the generated radical is bonded to an end of the carbon allotrope.

The carbon allotrope may be composed of $sp^2$ hybridized bonded carbon.

The step of preparing the carbon allotrope may include coating the carbon allotrope on a porous foam and drying the carbon allotrope coated on the porous foam.

The energy source may be at least one energy source selected from microwaves, electric fields, and plasma.

The solvent capable of inducing generation of a hydrophilic radical is a solvent having a hydroxyl group, and the solvent capable of inducing generation of a hydrophobic radical may be a solvent having a methyl group or a benzyl group.

The solvent capable of inducing generation of a hydrophilic radical is water, hydrogen peroxide, or a combination thereof, and the solvent capable of inducing generation of a hydrophobic radical may be acetone, toluene, or a combination thereof.

When the solvent is a solvent capable of inducing generation of a hydrophilic radical, an energy supply time for the step of supplying energy to the solvent using an energy source may be several minutes or less.

The step of bonding the generated radical to the end of the carbon allotrope may be performed under at least one inert gas selected from the group consisting of argon, helium, xenon, krypton, and neon.

When the solvent is a solvent capable of inducing generation of a hydrophobic radical, an energy supply time for the step of supplying energy to the solvent using an energy source may be several minutes or less.

The step of supplying energy to the solvent using an energy source may be capable of controlling a degree of a water contact angle (WCA) according to an energy supply time.

The porous foam may include at least one porous foam selected from the group consisting of melamine foam, polyurethane foam, nickel foam, a scouring pad, and natural foam.

The carbon allotrope may be one or more selected from single-walled carbon nanotubes, multi-walled carbon nanotubes, carbon nanofibers, graphene oxide, and two-dimensional graphene.

A water contact angle (WCA) may be 110° or more when the hydrophobic radical is bonded to the end of the carbon allotrope.

A water contact angle (WCA) may be 50° or less when the hydrophilic radical is bonded to the end of the carbon allotrope.

The step of supplying energy to the solvent using an energy source; and the step of generating a hydrophilic radical or a hydrophobic radical from the solvent through the energy supplied to the solvent such that the generated radical is bonded to the end of the carbon allotrope may include: generating an amino radical in the solvent through the energy supplied to the solvent; and obtaining a carbon allotrope modified with an amino group by bonding the amino radical to the end of the carbon allotrope.

A content of the amino group in the modified carbon allotrope may be 1 to 7 wt% based on the total weight of the carbon allotrope.

An energy supply time for the step of supplying energy may be several minutes or less.

The solvent capable of inducing generation of an amino radical may include a first solvent having a hydroxyl group and a second solvent having an amino group.

The first solvent may be hydrogen peroxide or water, and the second solvent may be urea or melamine.

The solvent capable of inducing generation of an amino radical may be hydrogen peroxide and urea.

The hydrogen peroxide and the urea may be mixed in a ratio of 1:1 to 1:4.

The method comprises: contacting a carbon allotrope exhibiting hydrophilicity by having a hydrophilic substituent located at an end of the carbon allotrope with a solvent capable of inducing generation of a hydrophobic radical; supplying energy to the solvent using an energy source; and converting the carbon allotrope exhibiting hydrophilicity into a carbon allotrope exhibiting hydrophobicity through the energy supplied to the solvent.

An energy supply time for the step of converting the carbon allotrope exhibiting hydrophilicity into a carbon allotrope exhibiting hydrophobicity may be several minutes or less.

The energy source may be at least one energy source selected from microwaves, electric fields, and plasma.

The method comprises: contacting a carbon allotrope exhibiting hydrophobicity by having a hydrophobic substituent located at an end of the carbon allotrope with a solvent capable of inducing generation of a hydrophilic radical; supplying energy to the solvent using an energy source; and converting the carbon allotrope exhibiting hydrophobicity into a carbon allotrope exhibiting hydrophilicity through the energy supplied to the solvent.

An energy supply time for the step of converting the carbon allotrope exhibiting hydrophobicity into a carbon allotrope exhibiting hydrophilicity may be several minutes or less.

The energy source may be at least one energy source selected from microwaves, electric fields, and plasma.

A wettability-modified carbon allotrope according to another embodiment of the present invention exhibits hydrophobicity by having a hydrophobic substituent located at an end of the carbon allotrope.

A water contact angle (WCA) may be 110° or more.

A wettability-modified carbon allotrope according to another embodiment of the present invention exhibits hydrophilicity by having a hydrophilic substituent located at an end of the carbon allotrope.

A water contact angle (WCA) may be 50° or less.

The method comprises: preparing a carbon allotrope; preparing a solvent capable of inducing generation of a hydrophilic radical; contacting the carbon allotrope with the solvent; supplying energy to the solvent using an energy source; generating a hydrophilic radical in the solvent through the energy supplied to the solvent; and obtaining a carbon allotrope modified with a hydrophilic group by bonding the hydrophilic radical to an end of the carbon allotrope.

The step of generating a hydrophilic radical in the solvent through the energy supplied to the solvent may include: generating an amino radical in the solvent through the energy supplied to the solvent; and obtaining a carbon allotrope modified with an amino group by bonding the amino radical to the end of the carbon allotrope.

A wettability-modified carbon allotrope according to another embodiment of the present invention is characterized in that an amino group is bonded to an end of the carbon allotrope.

An FT-IR spectrum of the modified carbon allotrope may include absorption regions in wavelength bands of 1120 $cm^{-1}$ and 3400 $cm^{-1}$.

A size of particles of the modified carbon allotrope may be 50 to 200 nm.

A water contact angle (WCA) of the modified carbon allotrope may be 50° or less.

The carbon allotrope may be composed of $sp^2$ hybridized bonded carbon.

The carbon allotrope may be one or more selected from single-walled carbon nanotubes, multi-walled carbon nanotubes, carbon nanofibers, graphene oxide, and two-dimensional graphene.


**[ADVANTAGEOUS EFFECTS]**

The wettability-modified carbon allotrope according to an embodiment of the present invention has an effect of securing long life and high capacitance by reversibly converting the wettability of the carbon allotrope according to the polarity of a liquid electrolyte in an electric double-layer capacitor.

The wettability-modified carbon allotrope according to an embodiment of the present invention is capable of wettability modification, so that electron transfer is active and ion diffusivity can be further promoted through a porous structure, thereby improving the performance of an electron and ion related device.

The wettability-modified carbon allotrope according to another embodiment of the present invention can improve dispersion stability by modifying the end of the carbon allotrope with an amino group.

The wettability-modified carbon allotrope according to another embodiment of the present invention has an effect of improving electrical conductivity by building an effective conductive network between active materials even in a small amount because the end of the carbon allotrope is modified with an amino group.

[BRIEF DESCRIPTION OF DRAWINGS]

FIG. 1 is a schematic diagram illustrating a principle of microwave-mediated wettability modification of three-dimensional graphene prepared according to an embodiment of the present invention.

FIG. 2a is a result of measuring a water contact angle (WCA) of three-dimensional graphene when energy is supplied via acetone in the wettability-modified carbon allotrope according to an embodiment of the present invention.

FIG. 2b is a result of measuring a water contact angle (WCA) of three-dimensional graphene when energy is supplied via water in the wettability-modified carbon allotrope according to an embodiment of the present invention.

FIG. 3 is a result of measuring a water contact angle (WCA) for reversible wettability control of three-dimensional graphene in the wettability-modified carbon allotrope according to an embodiment of the present invention.

FIG. 4 is a result of measuring a water contact angle (WCA) of three-dimensional graphene when energy is supplied to various organic solvents in the wettability-modified carbon allotrope according to an embodiment of the present invention.

FIG. 5 is a scanning electron microscope (SEM) image of three-dimensional graphene whose wettability is controlled through energy supply to different solvents in the wettability-modified carbon allotrope according to an embodiment of the present invention.

FIG. 6a is a Fourier transform infrared spectrometer (FT-IR) measurement result of three-dimensional graphene according to an embodiment of the present invention.

FIG. 6b is a Fourier transform infrared spectrometer (FT-IR) measurement peak deconvolution result for solvent-based energy supply of three-dimensional graphene according to an embodiment of the present invention.

FIG. 7a is an energy diagram for a hydroxyl group bonded to an end of superhydrophilic three-dimensional graphene in the wettability-modified carbon allotrope according to an embodiment of the present invention.

FIG. 7b is an energy diagram for a methyl group bonded to an end of superhydrophobic three-dimensional graphene in the wettability-modified carbon allotrope according to an embodiment of the present invention.

FIG. 8a is a cyclic voltammetry (CV) curve when a superhydrophobic three-dimensional graphene-based electrode is contacted with a non-polar or polar electrolyte in the wettability-modified carbon allotrope according to an embodiment of the present invention.

FIG. 8b is a cyclic voltammetry (CV) curve when a superhydrophilic three-dimensional graphene-based electrode is contacted with a non-polar or polar solvent in the wettability-modified carbon allotrope according to an embodiment of the present invention.

FIG. 9a is a galvanostatic charge/discharge (GCD) curve of a superhydrophobic three-dimensional graphene-based electrode contacted with a non-polar (1-Ethyl-3-methylimidazolium bis(trifluoromethyl-sulfonyl)-imide, EMIM-TFSI) electrolyte in the upper graph and a polar (6 M KOH) electrolyte in the lower graph at different current densities in the wettability-modified carbon allotrope according to an embodiment of the present invention.

FIG. 9b is a galvanostatic charge/discharge (GCD) curve of a superhydrophilic three-dimensional graphene-based electrode contacted with a non-polar (EMIM-TFSI) electrolyte in the upper graph and a polar (6 M KOH) electrolyte in the lower graph at different current densities in the wettability-modified carbon allotrope according to an embodiment of the present invention.

FIG. 9c is a graph showing a change in capacitance according to an increase in current density by calculating discharge capacitance based on the galvanostatic charge/discharge (GCD) measurement of FIG. 9b.

FIG. 10a is a galvanostatic charge/discharge (GCD) curve obtained by repeating five times an electric double-layer capacitor (EDLC) prepared with a non-polar (EMIM-TFSI) electrolyte at 0.2 A·g$^{-1}$ in the wettability-modified carbon allotrope according to an embodiment of the present invention.

FIG. 10b is a galvanostatic charge/discharge (GCD) curve obtained by repeating five times an electric double-layer capacitor (EDLC) prepared with a non-polar (EMIM-TFSI) electrolyte at 1 A·g$^{-1}$ in the wettability-modified carbon allotrope according to an embodiment of the present invention.

FIG. 10c is a graph showing a change in capacitance retention when an electric double-layer capacitor (EDLC) prepared with a non-polar (EMIM-TFSI) electrolyte is repeated 10,000 times at 1 A·g$^{-1}$.

FIG. 11 is a schematic diagram showing a method for modifying wettability of a carbon allotrope according to an embodiment of the present invention.

FIG. 12 is a result of measuring a water contact angle (WCA) of a wettability-modified carbon allotrope according to an embodiment of the present invention and a comparative example.

FIG. 13 is a thermogravimetric analysis (TGA) result of a carbon allotrope according to an embodiment of the present invention and a comparative example.

FIG. 14 is a Fourier transform infrared spectrometer (FT-IR) measurement result of a modified carbon allotrope according to an embodiment of the present invention.

FIG. 15 is a dynamic light scattering measurement result of a carbon allotrope according to an embodiment of the present invention and a comparative example.

FIG. 16 is a diagram showing a relationship between an electron donating group (EDG) and an electron withdrawing group (EWG) between a wettability-modified carbon allotrope and a solvent according to an embodiment of the present invention.

FIG. 17 is a result of evaluating dispersibility of a carbon allotrope according to an embodiment of the present invention and a comparative example.

FIG. 18 is a graph showing a change in capacity when charge/discharge is repeated 150 times for coin cells according to Example 2 and Comparative Examples 1, 3, and 5 of the present invention.

FIG. 19 is a graph showing charge/discharge rates according to rate performance differences of coin cells according to Example 2 and Comparative Examples 1, 3, and 5 of the present invention.

FIG. 20 is an electrochemical impedance spectroscopy (EIS) measurement result of coin cells according to an embodiment of the present invention and a comparative example.

FIG. 21 is a graph showing a change in capacity when charge/discharge is repeated 200 times for coin cells according to Example 2 and Comparative Examples 1 to 3 of the present invention.

FIG. 22 is a graph showing charge/discharge rates according to rate performance differences of coin cells according to Example 2 and Comparative Examples 1 to 3 of the present invention.

## [BEST MODE FOR CARRYING OUT THE INVENTION]

In the present specification, terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is for the purpose of referring to particular embodiments only and is not intended to limit the present invention. As used herein, the singular forms include the plural forms as well, unless the context clearly indicates otherwise. The meaning of "comprising" used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part, or other parts may be involved therebetween. In contrast, when a part is referred to as being "directly on" another part, no other part is interposed therebetween.

Unless otherwise defined, all terms including technical and scientific terms used herein have the same meaning as commonly understood by one of ordinary skill in the art to which the present invention belongs. Terms defined in commonly used dictionaries are further interpreted as having meanings consistent with relevant technical literature and the currently disclosed contents, and are not interpreted in an ideal or very formal sense unless defined otherwise.

In addition, unless otherwise specified, % means weight % (wt%), and 1 ppm is 0.0001 wt%.

In the present specification, the term "combination(s) thereof" described in a Markush-type expression refers to one or more mixtures or combinations selected from the group consisting of components described in the Markush-type expression, meaning that it includes any one or more selected from the group consisting of the components.

Hereinafter, embodiments of the present invention will be described in detail so that those of ordinary skill in the art to which the present invention belongs can easily practice it. However, the present invention may be implemented in many different forms and is not limited to the embodiments described herein.

## Method for Modifying Wettability of Carbon Allotropes

A carbon allotrope according to an embodiment of the present invention is capable of wettability modification. In the present specification, "wettability modification" refers to modifying wettability by supplying energy to a solvent capable of inducing generation of a hydrophilic radical, a hydrophobic radical, or an amino radical on a carbon allotrope. The carbon allotrope possesses active electron transfer and can further promote ion diffusion through a porous structure, so that the effect of improving the lifespan and capacitance of electron- and ion-related devices can be more preferably implemented.

Hereinafter, the wettability modification of a carbon allotrope according to an embodiment of the present invention will be described in detail.

A method for modifying wettability of a carbon allotrope according to an embodiment of the present invention comprises: preparing a carbon allotrope; preparing a solvent capable of inducing generation of a hydrophilic radical or a hydrophobic radical; contacting the carbon allotrope with the solvent; supplying energy to the solvent using an energy source; and generating a hydrophilic radical or a hydrophobic radical from the solvent through the energy supplied to the solvent, such that the generated radical is bonded to an end of the carbon allotrope.

In the method for modifying wettability of a carbon allotrope according to an embodiment of the present invention, the carbon allotrope may be composed of $sp^2$ hybridized bonded carbon, but is not limited thereto, and any material capable of wettability modification as a carbon allotrope in the art may be used. The carbon allotrope having $sp^2$ hybridization may be at least one carbon allotrope selected from graphene, multi-layered graphite, carbon nanotubes, fullerene ($C_{60}$), lonsdaleite, buckminsterfullerene, and buckyballs.

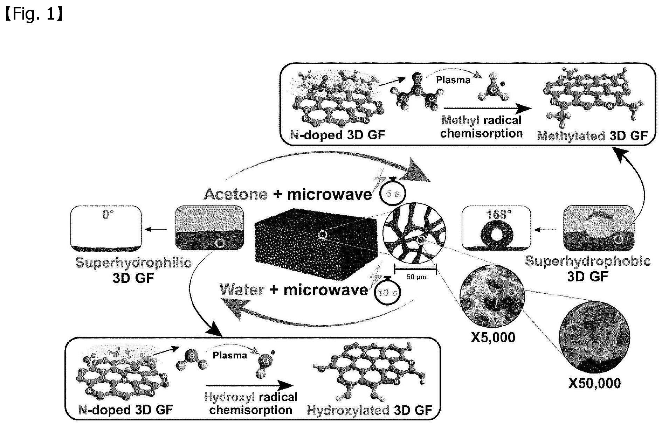

FIG. 1 is a schematic diagram illustrating the wettability control of three-dimensional graphene to which energy is supplied using an energy source in a solvent that induces a hydrophilic radical or a hydrophobic radical.

Referring to FIG. 1, it can be seen that three-dimensional graphene can undergo reversible wettability modification by supplying energy to a solvent having a hydrophilic functional group or a hydrophobic functional group.

In the method for modifying wettability of a carbon allotrope according to an embodiment of the present invention, the step of preparing the carbon allotrope may include coating the carbon allotrope on a porous foam and drying the carbon allotrope coated on the porous foam. The step of drying the carbon allotrope may be performed through an oven, but is not limited thereto, and any method capable of drying a carbon allotrope in the art may be used.

In the method for modifying wettability of a carbon allotrope according to an embodiment of the present invention, the energy source may be at least one energy source selected from microwaves, electric fields, and plasma, but is not limited thereto, and any source capable of supplying energy to a carbon allotrope may be used.

In addition, after the step of coating the carbon allotrope on the porous foam, a step of reducing the carbon allotrope by a hydrothermal reaction may be further included. Here, the hydrothermal reaction temperature is 140 to 180°C, and more specifically, may be 160°C. If the hydrothermal reaction temperature is less than 140°C, graphene oxide may not be sufficiently reduced, making energy supply by microwaves difficult. If the hydrothermal reaction temperature exceeds 180°C, the porous foam may be hydrolyzed, making it difficult to use in a foam form.

Further, the hydrothermal reaction time is 1 hour to 3 hours, and more specifically, may be 2 hours. If the hydrothermal reaction time is less than 1 hour, graphene oxide may not be sufficiently reduced, making energy supply by microwaves difficult. If the hydrothermal reaction time exceeds 3 hours, the porous foam may be hydrolyzed, making it difficult to use in a foam form.

Three-dimensional graphene can be obtained through a drying process of the carbon allotrope coated on the porous foam. The drying process may be performed by a general method used in the art and is not particularly limited. For example, it may be performed using freeze-drying, thermal drying, spray drying, or the like.

In the present specification, a solvent capable of generating a polar radical is defined as a solvent that is compatible with a hydrophilic solvent and contains an element such as oxygen, sulfur, phosphorus, or nitrogen as a substituent in the solvent.

In the present specification, a solvent capable of generating a non-polar radical is defined as a solvent that is compatible with a hydrophobic solvent and can promote a reaction with a non-polar compound during a radical generation process.

In the method for modifying wettability of a carbon allotrope according to an embodiment of the present invention, the solvent capable of inducing generation of a hydrophilic radical may include a solvent capable of generating a polar radical, but is not limited thereto, and any solvent capable of inducing generation of a hydrophilic radical upon receiving energy in the solvent may be used. Specifically, the solvent capable of generating a polar radical may include an Electron Withdrawing Group (EWG). In addition, the solvent capable of generating a polar radical may include water, ethanol, dimethyl sulfoxide, dimethylformamide, pyridine, acetic acid, hydrogen peroxide, or triethylamine.

In the method for modifying wettability of a carbon allotrope according to an embodiment of the present invention, the solvent capable of inducing generation of a hydrophobic radical may include a solvent capable of generating a non-polar radical, but is not limited thereto, and any solvent capable of inducing generation of a hydrophobic radical upon receiving energy in the solvent may be used. Specifically, the solvent capable of generating a non-polar radical may include an Electron Donating Group (EDG). In addition, the solvent capable of generating a non-polar radical may include hexane, toluene, chloroform, dichloromethane, xylene, or benzene.

In the method for modifying wettability of a carbon allotrope according to an embodiment of the present invention, the solvent capable of inducing generation of a hydrophilic radical is a solvent having a hydroxyl group, and the solvent capable of inducing generation of a hydrophobic radical may be a solvent having a methyl group or a benzyl group, but is not limited thereto. Any solvent capable of inducing generation of a hydrophilic radical or a hydrophobic radical in the art may be used.

In the method for modifying wettability of a carbon allotrope according to an embodiment of the present invention, the solvent capable of inducing generation of a hydrophilic radical may be water, hydrogen peroxide, or a combination thereof, and the solvent capable of inducing generation of a hydrophobic radical may be acetone, toluene, or a combination thereof, but is not limited thereto. Any solvent capable of inducing generation of a hydrophilic radical or a hydrophobic radical in the art may be used.

In the method for modifying wettability of a carbon allotrope according to an embodiment of the present invention, when the solvent is a solvent capable of inducing generation of a hydrophilic radical, an energy supply time for the step of supplying energy using an energy source may be several minutes or less, and specifically 5 minutes or less, 3 minutes or less, 1 minute or less, 30 seconds or less, or 15 seconds or less. When the energy supply time satisfies the range, it may be possible to manufacture a wettability-modified carbon allotrope in real-time as needed based on the short energy supply time.

In the method for modifying wettability of a carbon allotrope according to an embodiment of the present invention, the step of bonding the generated radical to the end of the carbon allotrope may be performed under at least one inert gas selected from the group consisting of argon, helium, xenon, krypton, and neon.

In the method for modifying wettability of a carbon allotrope according to an embodiment of the present invention, when the solvent is a solvent capable of inducing generation of a hydrophobic radical, an energy supply time for the step of supplying energy using an energy source may be several minutes or less, specifically 10 seconds or less, 7 seconds or less, or 5 seconds or less, and specifically 2 to 5 seconds. When the energy supply time satisfies the range, it may be possible to manufacture a wettability-modified carbon allotrope in real-time as needed based on the short energy supply time.

In the method for modifying wettability of a carbon allotrope according to an embodiment of the present invention, the step of supplying energy to the solvent using an energy source is capable of controlling the degree of the water contact angle (WCA) according to the energy supply time.

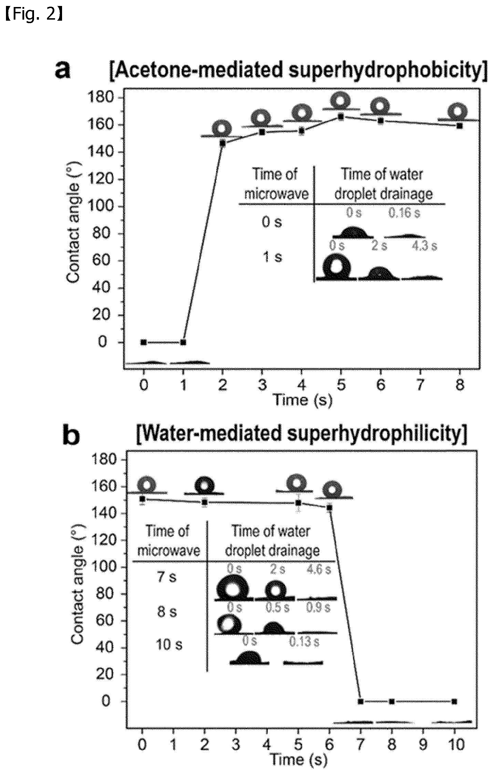

FIG. 2 shows water contact angle measurement results according to energy supply.

Referring to FIG. 2a, in the case of a solvent capable of inducing generation of a hydrophobic radical, during the process of converting a hydrophilic carbon allotrope to hydrophobic using an energy source, supplying energy for 2 seconds resulted in a WCA of 147°, and supplying energy for 5 seconds resulted in a WCA of 168°. It can be confirmed that the hydrophobicity of the carbon allotrope increases as the energy irradiation time increases, thereby increasing the WCA.

Referring to FIG. 2b, in the case of a solvent capable of inducing generation of a hydrophilic radical, during the process of converting a hydrophobic carbon allotrope to hydrophilic using an energy source, supplying energy for 7 seconds took 4.6 seconds for the carbon allotrope to absorb a water droplet, but supplying energy for 10 seconds took only 0.13 seconds for the carbon allotrope to absorb a water droplet. It can be confirmed that the hydrophilicity sequentially increases according to the energy supply time. Even if energy is supplied to the carbon allotrope in a solvent capable of inducing a hydrophobic or hydrophilic radical, the interconnected network of the carbon allotrope does not change, and the porous structure formed by pyrolysis due to energy supply can be preserved. This structure can be confirmed, for example, using Scanning Electron Microscopy (SEM).

In the method for modifying wettability of a carbon allotrope according to an embodiment of the present invention, the porous foam may include at least one porous foam selected from the group consisting of melamine foam, polyurethane foam, nickel foam, a scouring pad, and natural foam, but is not limited thereto.

In the method for modifying wettability of a carbon allotrope according to an embodiment of the present invention, the carbon allotrope may be one or more selected from single-walled carbon nanotubes, multi-walled carbon nanotubes, carbon nanofibers, graphene oxide, and two-dimensional graphene, but is not limited thereto.

In the method for modifying wettability of a carbon allotrope according to an embodiment of the present invention, when the hydrophobic radical is bonded to the end of the carbon allotrope, the WCA may be 110° or more, and specifically 150° or more. When the WCA satisfies this range, it can be utilized in fields requiring a carbon allotrope with good wettability with non-polar solvents or low wettability with polar solvents. In short, by modifying the wettability of the carbon allotrope according to the present invention, it can exhibit hydrophobicity, specifically superhydrophobicity.

In the present specification, "superhydrophobicity" may refer to a water contact angle of 150° or more.

In the method for modifying wettability of a carbon allotrope according to an embodiment of the present invention, when the hydrophilic radical is bonded to the end of the carbon allotrope, the WCA may be 50° or less, and specifically 0 to 5°. When the WCA satisfies this range, it can be utilized in fields requiring a carbon allotrope with good wettability with polar solvents or low wettability with non-polar solvents.

In short, by modifying the wettability of the carbon allotrope according to the present invention, it can exhibit hydrophilicity, specifically superhydrophilicity.

In the present specification, "superhydrophilicity" may refer to a water contact angle of 5° or less.

A method for modifying wettability of a carbon allotrope according to an embodiment of the present invention comprises: preparing a carbon allotrope; preparing a solvent capable of inducing generation of a hydrophilic radical; contacting the carbon allotrope with the solvent; supplying energy to the solvent using an energy source; generating a hydrophilic radical in the solvent through the energy supplied to the solvent; and obtaining a carbon allotrope modified with a hydrophilic group by bonding the hydrophilic radical to the end of the carbon allotrope.

In the method for modifying wettability of a carbon allotrope according to an embodiment of the present invention, the step of generating a hydrophilic radical in the solvent through the energy supplied to the solvent may include: generating an amino radical in the solvent through the energy supplied to the solvent; and obtaining a carbon allotrope modified with an amino group by bonding the amino radical to the end of the carbon allotrope.

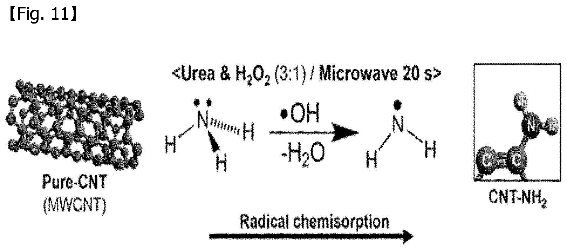

FIG. 11 is a schematic diagram illustrating a method for modifying wettability of a carbon allotrope according to an embodiment of the present invention.

Referring to FIG. 11, it can be confirmed that an amino radical is formed by supplying energy to a solvent in which urea and hydrogen peroxide are mixed at a ratio of 3:1, and the amino radical is chemisorbed onto an end of a carbon nanotube.

In the method for modifying wettability of a carbon allotrope according to an embodiment of the present invention, the content of the amino group in the modified carbon allotrope may be 1 to 7 wt% based on the total weight of the carbon allotrope, specifically 1.3 to 4.5 wt%, and more specifically 1.8 to 2.5 wt%. When the content of the amino group satisfies this range, it is a carbon allotrope in which about one amino group is bonded per about 17 carbon rings, and thus dispersion stability relative to a dispersion liquid can be improved. On the other hand, if the content of the amino group is out of the range, carbon allotropes may aggregate with each other, causing a problem of decreased dispersibility.

In the method for modifying wettability of a carbon allotrope according to an embodiment of the present invention, the energy supply time in the step of supplying energy may be several minutes or less, specifically 1 second to 5 minutes, 1 second to 2 minutes, 1 second to 1 minute, or 5 seconds to 30 seconds, more specifically 8 seconds to 25 seconds, and even more specifically 10 seconds to 20 seconds. When the energy supply time satisfies the range, an amino radical is formed in the solvent and bonded to the carbon allotrope, so that dispersion stability relative to a dispersion liquid can be improved. On the other hand, if the energy supply time exceeds the range, problems such as the possibility of damage and destruction of the carbon allotrope and excessive defect formation may occur.

In the method for modifying wettability of a carbon allotrope according to an embodiment of the present invention, the solvent capable of inducing generation of an amino radical may include a first solvent having a hydroxyl group and a second solvent having an amino group, but is not limited thereto. Any solvent capable of inducing generation of an amino radical upon receiving energy in the art may be used.

In the method for modifying wettability of a carbon allotrope according to an embodiment of the present invention, the first solvent is hydrogen peroxide or water, and the second solvent may be urea or melamine, but is not limited thereto. Any solvent having a hydroxyl group as a first solvent or a solvent having an amino group as a second solvent may be used. Ammonia water may also be used as the second solvent.

In the method for modifying wettability of a carbon allotrope according to an embodiment of the present invention, the solvent capable of inducing generation of an amino radical may be hydrogen peroxide and urea, but is not limited thereto. Any solvent capable of generating an amino radical upon receiving energy may be used.

In the method for modifying wettability of a carbon allotrope according to an embodiment of the present invention, the hydrogen peroxide and the urea may be mixed in a ratio of 1:1 to 1:4, specifically 1:1.5 to 1:3.5, and more specifically 1:2 to 1:3. When the ratio of hydrogen peroxide and urea satisfies the range, ammonia generated during the pyrolysis of urea and hydroxyl radicals generated during the pyrolysis of hydrogen peroxide undergo a dehydrogenation reaction, so that amino radicals can be appropriately generated in the solvent. On the other hand, if the ratio of hydrogen peroxide and urea is out of the range, problems such as the possibility of side reactions due to excessive formation of undesired radicals and hydroxyl modification instead of amine groups on the carbon allotrope may occur.

In the method for modifying wettability of a carbon allotrope according to an embodiment of the present invention, the carbon allotrope may include single-walled carbon nanotubes, multi-walled carbon nanotubes, carbon nanofibers, graphene, or graphene oxide, but is not limited thereto.

In the method for modifying wettability of a carbon allotrope according to an embodiment of the present invention, the method includes: contacting a carbon allotrope exhibiting hydrophilicity by having a hydrophilic substituent located at an end of the carbon allotrope with a solvent capable of inducing generation of a hydrophobic radical; supplying energy to the solvent using an energy source; and converting the carbon allotrope exhibiting hydrophilicity into a carbon allotrope exhibiting hydrophobicity through the energy supplied to the solvent.

In the method for modifying wettability of a carbon allotrope according to an embodiment of the present invention, the energy supply time in the step of converting the carbon allotrope exhibiting hydrophilicity into a carbon allotrope exhibiting hydrophobicity may be several minutes or less, specifically 5 minutes or less, 3 minutes or less, 1 minute or less, or 10 seconds or less, and more specifically 8 seconds or less. When the energy supply time satisfies the range, the carbon allotrope exhibiting hydrophilicity can be converted to a carbon allotrope exhibiting hydrophobicity. On the other hand, if the energy supply time is out of the range, it may be difficult to control the wettability of the carbon allotrope exhibiting hydrophilicity.

In the method for modifying wettability of a carbon allotrope according to an embodiment of the present invention, the energy source may be at least one energy source selected from microwaves, electric fields, and plasma, but is not limited thereto.

The method for modifying wettability of a carbon allotrope according to an embodiment of the present invention includes: contacting a carbon allotrope exhibiting hydrophobicity by having a hydrophobic substituent located at an end of the carbon allotrope with a solvent capable of inducing generation of a hydrophilic radical; supplying energy to the solvent using an energy source; and converting the carbon allotrope exhibiting hydrophobicity into a carbon allotrope exhibiting hydrophilicity through the energy supplied to the solvent.

In the method for modifying wettability of a carbon allotrope according to an embodiment of the present invention, the energy supply time in the step of converting the carbon allotrope exhibiting hydrophobicity into a carbon allotrope exhibiting hydrophilicity may be several minutes or less, specifically 1 minute or less, 40 seconds or less, 20 seconds or less, and more specifically 15 seconds or less. When the energy supply time satisfies the range, the carbon allotrope exhibiting hydrophobicity can be converted to a carbon allotrope exhibiting hydrophilicity. On the other hand, if the energy supply time is out of the range, it may be difficult to control the wettability of the carbon allotrope exhibiting hydrophobicity.

In the method for modifying wettability of a carbon allotrope according to an embodiment of the present invention, the energy source may be at least one energy source selected from microwaves, electric fields, and plasma, but is not limited thereto.

### Wettability-Modified Carbon Allotrooes

A wettability-modified carbon allotrope according to another embodiment of the present invention exhibits hydrophobicity by having a hydrophobic substituent located at an end of the carbon allotrope.

A wettability-modified carbon allotrope according to another embodiment of the present invention may have a WCA of 110° or more, and specifically a WCA of 150° or more.

A wettability-modified carbon allotrope according to another embodiment of the present invention exhibits hydrophilicity by having a hydrophilic substituent located at an end of the carbon allotrope.

A wettability-modified carbon allotrope according to another embodiment of the present invention may have a WCA of 50° or less, and specifically a WCA of 5° or less.

Hereinafter, the wettability-modified carbon allotrope of the present invention will be described with reference to the accompanying drawings.

FIG. 2a is a result of measuring the WCA of three-dimensional graphene when energy is supplied via an acetone solvent that induces a hydrophobic radical. Even if a three-dimensional graphene bonded with a hydrophilic radical having an acetone residue is irradiated for only 2 seconds as an energy source, it is possible to convert from a hydrophilic radical to a hydrophobic radical, and the WCA shows a maximum of 168°. The correlation between the energy supply time and hydrophobicity is related to the degree of chemisorption of non-polar methyl groups provided in the decomposition of acetone by energy supply.

FIG. 2b is a result of measuring the WCA of three-dimensional graphene to which energy is supplied via water. When a three-dimensional graphene foam is treated with water vapor as a source of hydroxyl radicals and energy is supplied for 7 seconds, the WCA shows 0°. Energy supply via water requires a longer reaction time for wettability conversion. Amphiphilic acetone is not blocked from approaching a hydrophobic surface, but hydrophilic water may have difficulty approaching a hydrophobic surface even in a vapor phase.

Meanwhile, a wettability-modified carbon allotrope according to another embodiment of the present invention is characterized in that an amino group is bonded to an end of the carbon allotrope. When an amino group is bonded to the end of the carbon allotrope, a hydrogen bond is formed due to an interaction between a carbonyl group of a methylpyrrolidone (NMP) solvent and the amino group at the end of the carbon allotrope. The amino group at the end of the carbon allotrope acts as an Electron Donating Group (EDG) and the carbonyl group in NMP acts as an Electron Withdrawing Group (EWG), so that the amino group-modified carbon nanotubes bond and interact more strongly with NMP, thereby improving dispersion stability.

In the wettability-modified carbon allotrope according to another embodiment of the present invention, an FT-IR spectrum of the modified carbon allotrope may include absorption regions in wavelength bands of 1120 $cm^{-1}$ and 3400 $cm^{-1}$. When the FT-IR spectrum satisfies these wavelength bands, it can be seen that the modified carbon allotrope includes N-H and C-N bonds.

In the wettability-modified carbon allotrope according to another embodiment of the present invention, the size of particles of the modified carbon allotrope may be 50 to 200 nm, specifically 70 to 150 nm, and more specifically 80 to 120 nm. When the particle size of the modified carbon allotrope satisfies the range, the modified carbon allotrope can be uniformly dispersed in methylpyrrolidone (NMP). On the other hand, if the particle size of the modified carbon allotrope is out of the range, the modified carbon allotrope in NMP sinks, causing a problem of decreased dispersibility.

In the wettability-modified carbon allotrope according to another embodiment of the present invention, the WCA of the modified carbon allotrope may be 50° or less, specifically 30° or less, and more specifically 10° or less. When the WCA satisfies the range, a hydrophilic surface is formed on the modified carbon allotrope, so that dispersibility in a polar solvent can be improved. On the other hand, if the WCA of the modified carbon allotrope is out of the range, a hydrophilic surface is not appropriately formed, so that dispersibility in a polar solvent may decrease.

In the wettability-modified carbon allotrope according to another embodiment of the present invention, the carbon allotrope may be composed of $sp^2$ hybridized bonded carbon, but is not limited thereto. Any material that can be modified to improve the dispersibility of a carbon allotrope in the art may be used.

In the wettability-modified carbon allotrope according to another embodiment of the present invention, the carbon allotrope is at least one selected from single-walled carbon nanotubes, multi-walled carbon nanotubes, carbon nanofibers, graphene oxide, and two-dimensional graphene, but is not limited thereto. Any material that can be modified to improve the dispersibility of a carbon allotrope in the art may be used.

## Manufacturing of a Supercapacitor

A wettability-modified carbon allotrope manufactured according to the present invention may be used as a supercapacitor including it as an electrode. The basic structure of the supercapacitor may include a positive electrode and a negative electrode, electrodes including them, and an electrolyte.

It includes a negative electrode; a positive electrode disposed opposite to the negative electrode; and an electrolyte disposed between the negative electrode and the positive electrode and providing a pathway for ions. At least one of the negative electrode and the positive electrode may include a carbon allotrope.

The electrolyte providing the pathway for ions may be a non-polar electrolyte or a polar electrolyte. The non-polar electrolyte may include at least one selected from 1-Ethyl-3-methylimidazolium bis(trifluoromethylsulfonyl)imide (EMIM-TFSI), 1-Ethyl-3-Methylimidazolium Hexafluorophosphate (EMIM-PF$_6$), and 1-Ethyl-3-methylimidazolium bis(fluorosulfonyl)imide (EMIM-FSI), but is not limited thereto. Any material capable of being used as a non-polar electrolyte in the art is possible. The polar electrolyte may include at least one selected from potassium hydroxide (KOH), sulfuric acid (H$_2$SO$_4$), and potassium chloride (KCl), but is not limited thereto. Any material capable of being used as a polar electrolyte in the art is possible.

The supercapacitor of the present invention may be classified into an electric double-layer capacitor or a pseudocapacitor according to a charge storage mechanism. In one specific embodiment, the supercapacitor of the present invention may be an electric double-layer capacitor. The supercapacitor utilizes the principle of pseudocapacitance, which stores energy through reversible Faradaic redox reactions at the electrode-electrolyte interface. In an electric double-layer capacitor, a separator with excellent insulation is disposed between a pair of polarizable electrodes made of a carbon material to form a double layer between the electrode and the electrolyte, thereby developing capacitance and improving the energy storage capacity of the capacitor.

Hereinafter, the present invention will be specifically described through examples, but the following examples and experimental examples are merely intended to illustrate one form of the present invention, and the scope of the present invention is not limited by the following examples and experimental examples.

[MODE FOR CARRYING OUT THE INVENTION]

## Example 1

### 1-1. Preparation of Three-Dimensional Graphene

Melamine foam was cut into cubes of $1 \times 1 \times 1.5\,cm^3$, coated with a large amount of graphene oxide solution, and then reduced by a hydrothermal reaction at 160°C for 2 hours. By freeze-drying overnight, three-dimensional (3D) graphene capable of reacting with microwaves was obtained. Microwave radiation (2.54 GHz, 350 W) was applied for 15 seconds in an inert gas (Ar) atmosphere to produce hydroxyl-bonded superhydrophilic 3D graphene of Example 1-1 through carbonization, reduction, and nitrogen doping by arc formation.

### 1-2. Method for Modifying Wettability of Superhydrophilic 3D Graphene

To modify the wettability from the superhydrophilic 3D graphene obtained in Example 1-1 to superhydrophobic 3D graphene, the 3D graphene of Example 1-1 was contacted with acetone and immediately dried in an oven. For the chemisorption of methyl radicals, the superhydrophilic 3D graphene with acetone residues was irradiated with microwaves for up to 8 seconds to be converted into superhydrophobic 3D graphene.

### 1-3. Method for Modifying Wettability of Superhydrophobic 3D Graphene

To modify the wettability from the superhydrophobic 3D graphene obtained in Example 1-2 to superhydrophilic 3D graphene, the 3D graphene of Example 1-2 was exposed to water vapor using an autoclave. For the adsorption of hydroxyl radicals, the superhydrophobic graphene with residual moisture was irradiated with microwaves for up to 10 seconds to be converted into superhydrophilic 3D graphene.

### 1-4. Manufacture of Electrode

The 3D graphene of Example 1-2 and Example 1-3 were prepared. The electrochemical performance of an ionic liquid 1-ethyl-3-methylimidazolium bis(trifluoromethylsulfonyl) imide (EMIM-TFSI)-based electric double-layer capacitor was evaluated using coin-type (CR2032) cells. To prepare a working electrode, a mixture of 80 wt% of polarity-controlled 3D graphene as an active material, 10 wt% of acetylene black, and 10 wt% of polyvinylidene fluoride (PVDF) binder was coated on nickel (Ni) foam (thickness: 100 $\mu$m, $1 \times 1$ cm$^2$) with a mass of up to 1.0 mg·cm$^{-2}$, followed by drying in a vacuum oven and pressing to manufacture an electric double-layer capacitor electrode.

## Example 2

### 2-1. Manufacture of Carbon Nanotubes Modified with Amino Groups for Wettability

A solvent in which urea and hydrogen peroxide were mixed in a 3:1 ratio and multi-walled carbon nanotubes (MWCNTs) were prepared. The MWCNTs were contacted with the solvent and irradiated with microwaves for 10 to 20 seconds. The MWCNTs reacted with the microwaves to form plasma, and the solvent was decomposed into amino radicals by the plasma. The decomposed amino radicals were chemisorbed onto the ends of the carbon nanotubes to obtain carbon nanotubes whose wettability was modified with amino groups.

### 2-2. Manufacture of Electrode Slurry

A positive electrode active material (LFP, LiFePO$_4$), the modified carbon nanotubes of Example 2-1, and a binder (PVDF, Polyvinylidene Fluoride) were prepared in a weight ratio of 8 : 1 : 1. Specifically, a binder solution was prepared by dissolving the NMP solvent and the binder (PVDF) in a weight ratio of 36.3 : 3.7. Carbon nanotubes were added to the binder solution, stirred for 3 hours, and then ultrasonicated for 20 minutes to disperse the modified carbon nanotubes of Example 2-1 in the binder solution. Thereafter, using a Thinky mixer, the binder solution was added to the solids obtained by mixing the positive electrode active material and the modified carbon nanotubes of Example 2-1 for 4 minutes and re-mixed to manufacture an electrode slurry for a secondary battery.

### 2-3. Manufacture of Coin Cell

The electrode slurry manufactured in Example 2-2 was uniformly applied to an electrode current collector (aluminum foil) using a doctor blade such that the total loading density was about 3 to 4 mg/cm$^2$. The electrode current collector coated with the electrode slurry was dried at 60°C for 6 hours in a vacuum oven to manufacture an electrode. After rolling the electrode to a thickness of about 70% of the initial thickness, a coin cell was manufactured using the rolled electrode as a positive electrode and Li metal as a negative electrode.

## Comparative Example 1

### 1-1. Carbon Nanotubes

Carbon nanotubes (Manufacturer: Carbon Nanotech, length: max 10 $\mu$m, diameter: 5 to 15 nm) were prepared.

### 1-2. Manufacture of Electrode Slurry

An electrode slurry was manufactured in the same manner as in Example 2-2, except that the carbon nanotubes of Comparative Example 1-1 were used during the manufacture of the electrode slurry.

### 1-3. Manufacture of Coin Cell

A coin cell was manufactured in the same manner as in Example 2-3, except that the electrode slurry manufactured in Comparative Example 1-2 was used.

## Comparative Example 2

### 2-1. Single-walled Carbon Nanotubes

Single-walled carbon nanotubes (Manufacturer: Tuball, length: >5 $\mu$m, diameter: 1.6 nm) were prepared.

### 2-2. Manufacture of Electrode Slurry

An electrode slurry was manufactured in the same manner as in Example 2-2, except that the single-walled carbon nanotubes of Comparative Example 2-1 were used, and the weight ratio of the NMP solvent to the binder (PVDF) was 97 : 2.

### 2-3. Manufacture of Coin Cell

A coin cell was manufactured in the same manner as in Example 2-3, except that the electrode slurry manufactured in Comparative Example 2-2 was used.

### Comparative Example 3

### 3-1. Manufacture of Carbon Nanotubes Modified with Carboxyl Groups

Carbon nanotubes were manufactured in the same manner as in Example 2-1, except that a 3:1 mixed solution of formic acid and hydrogen peroxide was used as a solvent, and carboxyl groups were chemisorbed onto the ends of the carbon nanotubes to obtain carbon nanotubes modified with carboxyl groups.

### 3-2. Manufacture of Electrode Slurry

An electrode slurry was manufactured in the same manner as in Example 2-2, except that the modified carbon nanotubes of Comparative Example 3-1 were used.

### 3-3. Manufacture of Coin Cell

A coin cell was manufactured in the same manner as in Example 2-3, except that the electrode slurry of Comparative Example 3-2 was used.

### Comparative Example 4

### 4-1. Preparation of Carbon Black (Super P)

Carbon black (Super P, Manufacturer: MTI, size: >20 $\mu$m) was prepared.

### 4-2. Manufacture of Electrode Slurry

An electrode slurry was manufactured in the same manner as in Example 2-2, except that the carbon black (Super P) of Comparative Example 4-1 was used.

### 4-3. Manufacture of Coin Cell

A coin cell was manufactured in the same manner as in Example 2-3, except that the electrode slurry of Comparative Example 4-2 was used.

### Reference Example 1

### 1-1. Manufacture of Carbon Nanotubes Modified with Methyl Groups

Carbon nanotubes were manufactured in the same manner as in Example 2-1, except that acetone was used as a solvent, and methyl groups were chemisorbed onto the ends of the carbon nanotubes to obtain carbon nanotubes modified with methyl groups.

### 1-2. Manufacture of Electrode Slurry

An electrode slurry was manufactured in the same manner as in Example 2-2, except that the methyl group-modified carbon nanotubes of Reference Example 1-1 were used.

### 1-3. Manufacture of Coin Cell

A coin cell was manufactured in the same manner as in Example 2-3, except that the electrode slurry of Reference Example 1-2 was used.

### Experimental Example 1: Measurement of Water Contact Angle (WCA)

After dropping 10 $\mu$L of a water droplet onto the surface of 3D graphene or carbon nanotubes according to an embodiment of the present invention and a comparative example, the water contact angle (WCA) was measured three times using a goniometer (SmartDrop, FemtoFab), and the average measured values are shown in FIGS. 2, 3, and 12.

FIG. 2a is the WCA measurement result of the 3D graphene irradiated with microwaves via an acetone solvent inducing hydrophobic radicals in Example 1-2, which was a maximum of 168°. The correlation between the microwave irradiation time and hydrophobicity is related to the degree of chemisorption of non-polar methyl groups provided by the microwave decomposition of acetone. FIG. 2b is the WCA measurement result of the 3D graphene irradiated with microwaves via water in Example 1-3, which was a minimum of 0°.

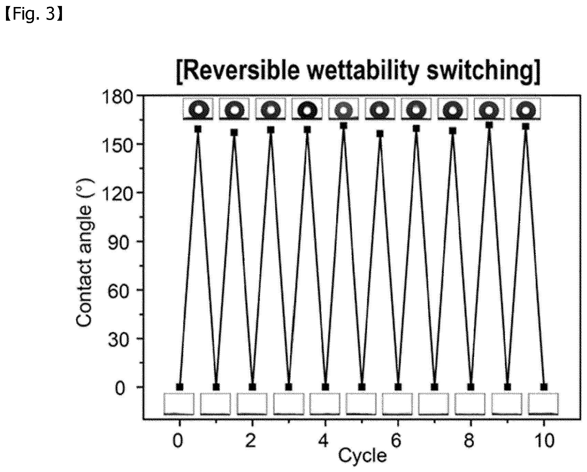

FIG. 3 shows the WCA measurement results for the reversible wettability control of the 3D graphene. As the microwave treatment was performed alternately 10 times with different solvents according to Example 1-2 or Example 1-3, the WCA changed from 0° to 156-162°, demonstrating that the 3D graphene is capable of reversible wettability control from hydrophilic to hydrophobic.

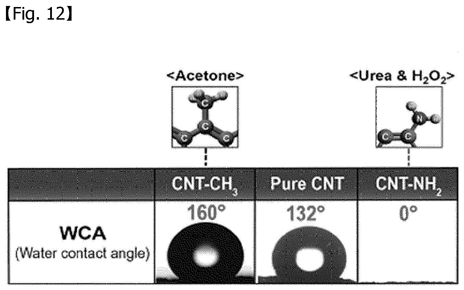

Referring to FIG. 12, the WCAs of Comparative Example 1-1 and Reference Example 1-1 were about 132° and 160°, showing high hydrophobicity. However, in the case of the carbon nanotubes of Example 2-1 where amino groups were bonded to the ends, the WCA was 0°, forming a superhydrophilic surface, which can improve dispersibility in polar solvents.

### Experimental Example 2: Solvent Analysis

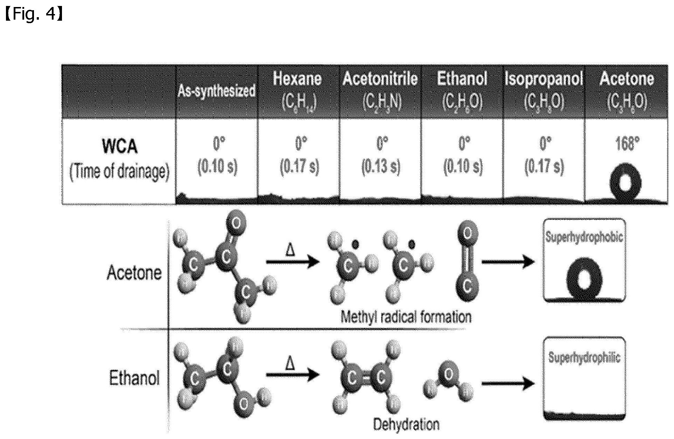

To control the wettability from superhydrophilic 3D graphene to superhydrophobic 3D graphene, the superhydrophilic 3D graphene was contacted with ethanol and immediately dried in an oven. Although microwaves were irradiated for up to 8 seconds on the superhydrophilic 3D graphene with acetone residues for the chemisorption of methyl radicals, ethanol directly induced a dehydration process without methyl radical formation, so hydrophobic radicals could not bond to the ends of the 3D graphene. Even when microwaves were irradiated on different organic solvents other than ethanol, hydrophobic radicals could not bond to the ends of the 3D graphene, as seen in FIG. 4.

FIG. 4 shows the WCA measurement results of 3D graphene upon supplying energy to various organic solvents. The 3D graphene foam where hydrophilic radicals were bonded to the ends absorbed water droplets within 0.1 to 0.2 seconds. Unlike other methyl-containing solvents, acetone formed highly reactive methyl radicals during pyrolysis. Ethanol tends to dehydrate instead of forming methyl radicals, whereas acetone generally pyrolyzes into methyl radicals and carbon monoxide.

### Experimental Example 3: Physical Property Analysis

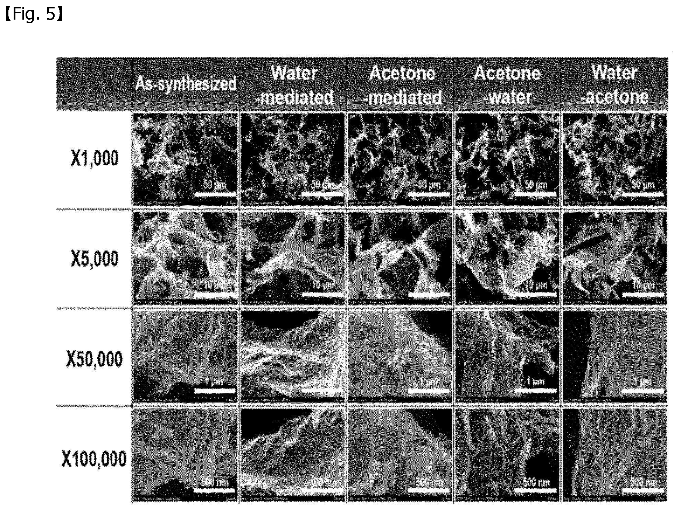

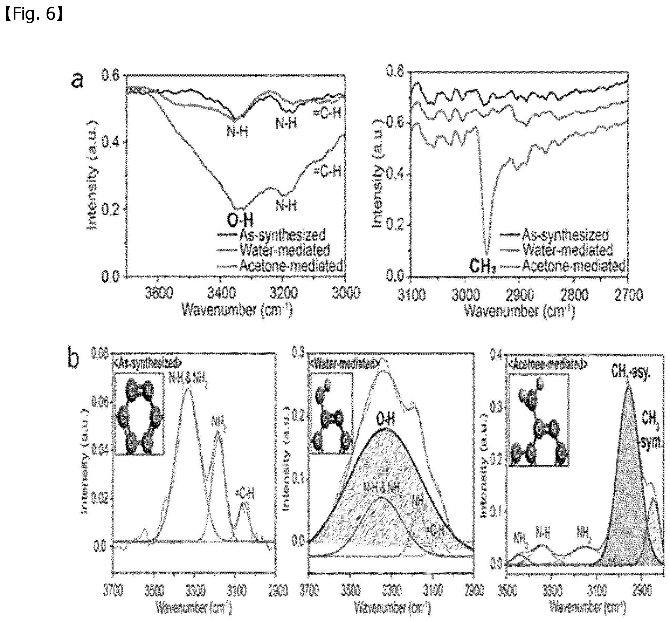

The structure and elemental characteristics of the 3D graphene were measured using a field emission SEM (FE-SEM, Hitachi S-4800, Japan) at an acceleration voltage of 20 kV equipped with an X-ray energy dispersive spectrometer (EMAX ENERGY EX-250, Horiba, Japan). Also, to investigate the morphological structure of the 3D graphene, images were scanned using a scanning transmission electron microscope (STEM, JEOL JEM-2100F, Japan) with an image-forming Cs corrector and an acceleration voltage of 200 kV, as shown in FIG. 5. For sample preparation, 3D graphene in powder form was ultrasonicated in anhydrous ethanol, and 6 $\mu$L of the solution was added to a carbon-coated copper TEM grid. Fourier transform infrared spectrometer (FT-IR) spectra were acquired from an infrared spectrometer (Spectrum 2, PerkinElmer) in attenuated total reflection (ATR) mode with a resolution of 1 cm$^{-1}$ and 64 scans, as shown in FIG. 6.

FIG. 5 shows SEM images of the wettability-controlled 3D graphene foams irradiated with microwaves via different solvents. All 3D graphene foams showed a 3D graphene network having many macropores (x1,000, x5,000) and wrinkled graphene surfaces (x50,000 and x100,000). Despite repeated wettability control, the structural characteristics of the 3D graphene foam were well preserved, showing structural robustness.

FIG. 6a shows the FTIR measurement results of the hydroxylated (left, band of 3000 to 3600 cm$^{-1}$) and methylated (right, peak of 2960 cm$^{-1}$) 3D graphene foams of Example 1-2 and Example 1-3. The left result of FIG. 6a showed a broad absorption band in the 3000 to 3600 cm$^{-1}$ region when comparing the synthesized 3D graphene and the 3D graphene irradiated with microwaves via water. This did not appear in the acetone-based microwave irradiation, demonstrating that water is responsible for the chemisorption of polar functional groups. On the other hand, the right result of FIG. 6a showed an additional peak at 2960 cm$^{-1}$ when comparing the 3D graphene and the 3D graphene irradiated with microwaves via acetone, which was not observed in the 3D graphene irradiated with microwaves via water, indicating that non-polar groups were chemisorbed onto the graphene ends.

FIG. 6b shows the FT-IR peak deconvolution results for the 3D graphene after synthesis (left, 3000 to 3700 cm$^{-1}$), water-based microwave treatment (middle, 3000 to 3700 cm$^{-1}$), and acetone-based microwave treatment (right, 2800 to 3500 cm$^{-1}$). Deconvolved hydroxyl and methyl stretching bands are indicated in gray. It was confirmed that the wettability of the 3D graphene changed due to the chemisorption of hydroxyl radicals or methyl radicals. When deconvolving the spectrum of the 3D graphene synthesized in Example 1-1 in the 2900 to 3700 cm$^{-1}$ range, three small N-H, NH$_2$, and =C-H stretching peaks appeared at 3322, 3180, and 3057 cm$^{-1}$, which may be due to the pyrolysis of the melamine skeleton during 3D graphene synthesis.

The spectrum of the 3D graphene irradiated with microwaves via water includes an additional O-H stretching band at 3320 cm$^{-1}$, showing that hydroxyl radicals are chemically adsorbed onto the 3D graphene surface.

**Experimental Example 4: Density Functional Theory (DFT) Calculation**

Density functional theory (DFT) calculations were performed using the Gaussian 09 (G09) program package. The input geometries of graphene (10 rings), hydroxyl radicals, and methyl radicals were optimized by DFT/B3LYP using a 6+31G** basis set.

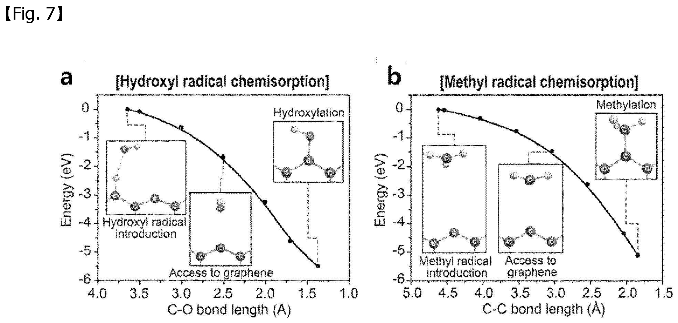

The energy diagrams for the chemisorption of methyl and hydroxyl groups onto graphene edges were obtained by adjusting and fixing the bonding distance between the radical and the graphene edge using the redundant option, while the energy diagrams for the desorption process were calculated using QST2 and QST3 approaches. All calculations were visualized with the Chemcraft 1.8 package, as shown in FIG. 7.

Here, 6+31G** is a type of basis set used to find the density function; the meaning of 6, 31 is that the electronic orbitals belonging to the inner atomic shell were implemented with 6 Gaussian functions, and the outermost electronic orbitals were represented by two orbitals containing 3 Gaussian functions and 1 Gaussian function, respectively. + denotes a diffusion function, which refers to a function that implements orbital changes caused by ionization, intermolecular interactions (dispersion forces, hydrogen bonds), etc. ** accounts for d and p orbitals to consider orbital polarization caused by chemical bonding. DFT/B3LYP is a type of functional used for structure optimization, referring to a hybrid model in which three parameters are supplemented to the Becke potential by Lee, Yang, and Parr.

FIG. 7a is an energy diagram for a hydroxyl group at an end of 3D graphene where hydrophilic radicals are bonded to the end as in Example 1-2. When a methyl radical approaches 3D graphene where hydroxyl radicals are bonded to the end, a methanol-like intermediate is formed, and the activation energy of the substitution reaction decreased to 1.82 eV.

FIG. 7b is an energy diagram for methylation at an end of 3D graphene where hydrophobic radicals are bonded to the end as in Example 1-3. When a hydroxyl radical approaches 3D graphene where methyl radicals are bonded to the end, a methanol-like intermediate is formed, and the activation energy of the substitution reaction decreased to 1.99 eV. When pre-adsorbed functional groups are desorbed from the 3D graphene, spontaneous chemisorption of methyl or hydroxyl radicals occurs, and wettability can be adjusted immediately with reversibility.

**Experimental Example 5: Evaluation of Electrochemical Performance of Electric Double-Layer Capacitor**

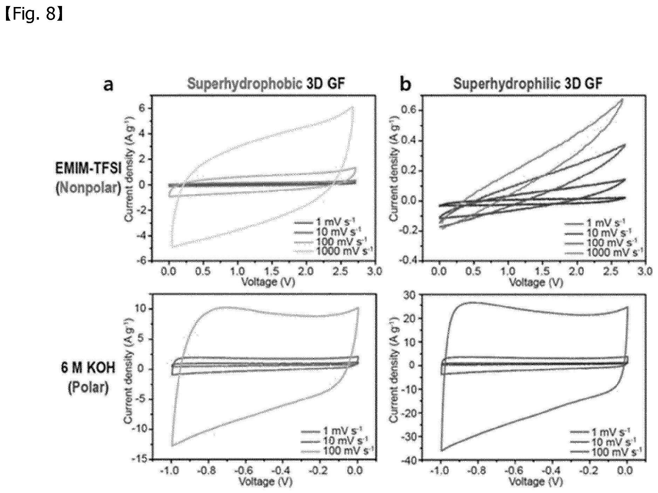

To evaluate the electrochemical performance of the electric double-layer capacitor (EDLC) of Example 1-4 based on 1-ethyl-3-methylimidazolium bis(trifluoromethylsulfonyl) imide (EMIM-TFSI), type 2032 coin cells were assembled with 100 μL of electrolyte by filling two identical electrodes in a glove box (oxygen and water less than 0.01 ppm, VTI, USA). The electrochemical performance was tested using a multi-channel potentiostat/galvanostat (WMPG 1000, WonAtech). Impedance spectroscopy (EIS) was measured using a potentiostat/galvanostat (VMP3, Bio-Logic, France). For the aqueous electrolyte-based EDLC, electrodes were manufactured in a three-electrode system by immersing a silver/silver chloride reference electrode and a platinum counter electrode in a 50 mL 6 M potassium hydroxide aqueous electrolyte. Electrochemical performance and impedance spectroscopy were measured with a multi-channel potentiostat/galvanostat (ZIVE MP1, WonAtech), as shown in FIG. 8.

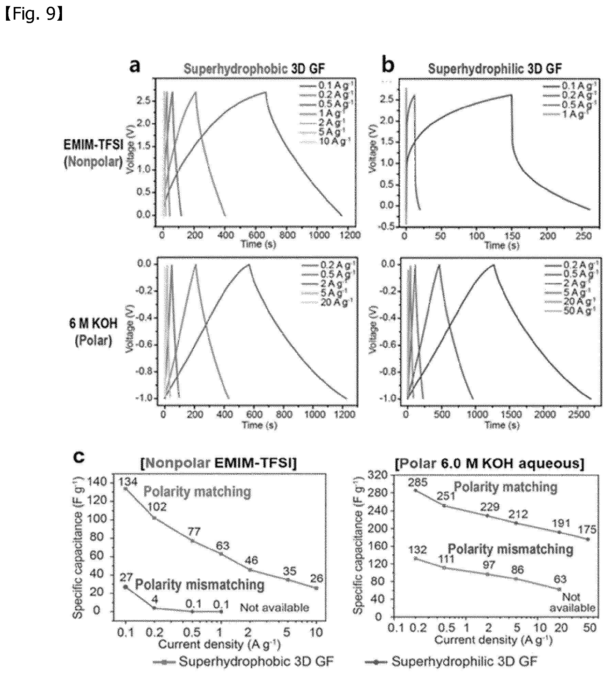

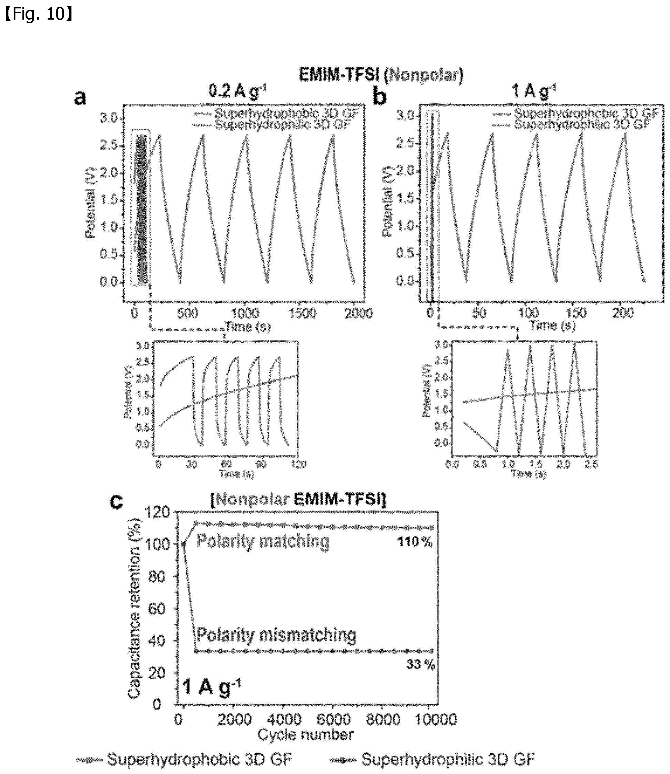

All calculations for electrochemical performance follow Equation 1 for the capacitance of the galvanostatic charge-discharge (GCD), as shown in FIGS. 9 and 10.

$$[\text{Equation 1}] \quad Cs = (I \cdot \Delta td) / (m \cdot (Vmax - Vmin))$$

Where Cs is the capacitance (F·g$^{-1}$), I is the current, $\Delta$td is the discharge time (s), m is the mass of the active material of the electrode (g), and (Vmax - Vmin) is the potential change.

FIG. 8a is a cyclic voltammetry (CV) curve when an electrode based on 3D graphene with hydrophobic radicals bonded to the ends is contacted with a non-polar (EMIM-TFSI) or polar (6 M KOH) solvent, and FIG. 8b is a CV curve when an electrode based on 3D graphene with hydrophilic radicals bonded to the ends is contacted with a non-polar or polar solvent. In the case of an EDLC where an electrode with a polarity mismatch is immersed in a non-polar (EMIM-TFSI) electrolyte, the current density hardly increased compared to the other three electrodes even after increasing the scan rate to 1000 mV·s$^{-1}$. Polarity mismatch significantly lowered the performance of the non-polar (EMIM-TFSI) electrolyte-based EDLC.

FIG. 9a is a GCD curve of a superhydrophobic 3D graphene foam-based electrode contacted with non-polar (EMIM-TFSI) and polar (6 M KOH) electrolytes at different current densities. FIG. 9b is a GCD curve of a superhydrophilic 3D graphene-based electrode contacted with non-polar (EMIM-TFSI) and polar (6 M KOH) electrolytes at different current densities. GCD was calculated according to Equation 1. The EDLC of FIG. 9b using a polarity-mismatched non-polar (EMIM-TFSI) electrolyte showed a large ohmic drop and a short discharge time, resulting in a severe deviation from the typical triangular GCD curve compared to the polarity-matched case in FIG. 9a.

FIG. 9c is the capacitance calculated based on the GCD measurement results of FIG. 9b. The EDLCs using polarity-matched non-polar (EMIM-TFSI) and polarity-matched polar (6 M KOH) electrolytes showed higher capacitance (4.96 and 2.16 times higher, respectively, based on a current density of 0.1 A/g) compared to the polarity-mismatched cases, and showed little capacitance degradation even at high current densities (0.5 A/g or more).

FIG. 10a is a GCD curve repeated 5 times for an EDLC manufactured with a non-polar (EMIM-TFSI) electrolyte at 0.2 A/g. FIG. 10b is a GCD curve repeated 5 times for an EDLC manufactured with a non-polar (EMIM-TFSI) electrolyte at 1 A/g. At 0.2 A/g, the polarity-mismatched EDLC showed a large ohmic drop and a short discharge time along with a severe capacitance degradation after the first cycle compared to the polarity-matched case. As the current density increased to 1 A/g, the performance degradation became even more severe, with 5 charge/discharge repetitions completed within 3 seconds, and a voltage range deviation of 0 to 0.27 V occurring after 1 repetition.

FIG. 10c shows that polarity matching had a beneficial effect on the cycle life of the EDLC compared to polarity mismatch. In the case of polarity matching, after 10,000 cycles at 1 A/g, an excellent cycle life with a capacity retention of 110.1% was observed, whereas, in the case of polarity mismatch, only 33.3% of the capacity was maintained due to severe lifespan degradation.

## Experimental Example 6: Amino Group Content Analysis

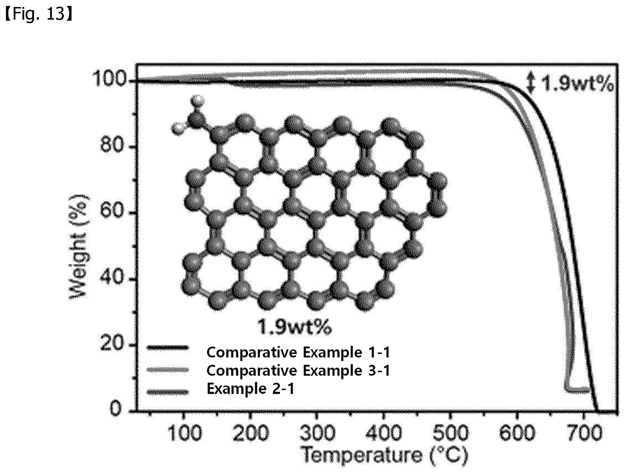

Thermogravimetric analysis (TGA, HITACHI, STA7300) was performed for analyzing the amino group content in the carbon nanotubes manufactured in an embodiment of the present invention and a comparative example. After putting about 4.5 mg of carbon nanotubes in a platinum pan, the temperature was equilibrated at 30°C for 10 minutes, then raised to 800°C at a heating rate of 10°C/min in a nitrogen atmosphere. Ash content was evaluated at about 600°C, and the results are shown in FIG. 13.

Referring to FIG. 13, TGA results of the carbon nanotubes of Comparative Example 1-1, Comparative Example 3-1, and Example 2-1 confirmed that the amino group-modified carbon nanotubes of Example 2-1 had an amino group ratio of 1.9 wt%, which means that about one amino functional group is bonded per 17 carbon rings.

## Experimental Example 7: Evaluation of Carbon Nanotube Modification

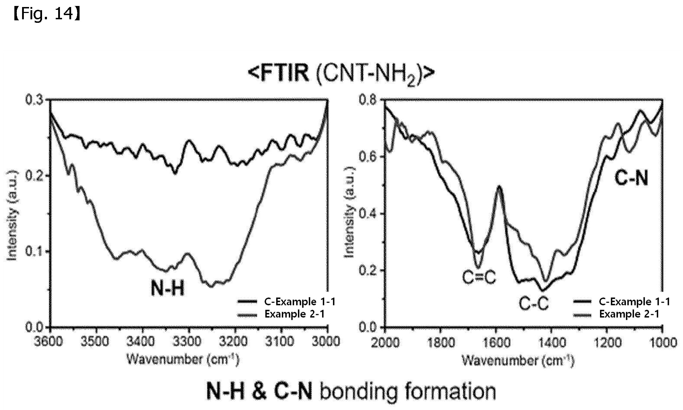

To confirm the carbon nanotube modification according to an embodiment of the present invention and a comparative example, a Fourier transform infrared spectrometer (FT-IR) was measured. The FT-IR spectrum was measured for the modified carbon allotrope using an infrared spectrometer (Spectrum 2, PerkinElmer) in ATR mode with a resolution of 1 cm$^{-1}$ and 64 scans, and the results are shown in FIG. 14.

Referring to the left graph of FIG. 14, an N-H stretching vibration peak (3400 cm$^{-1}$) could not be confirmed for the carbon nanotubes of Comparative Example 1-1. However, in Example 2-1, an N-H stretching vibration peak (3400 cm$^{-1}$) was confirmed in the left graph of FIG. 14, and a C-N stretching vibration peak (1120 cm$^{-1}$) was confirmed in the right graph of FIG. 14. This means that a chemical bond was formed between the carbon nanotubes and the amino groups through a radical reaction by microwaves, such that the carbon nanotubes were effectively modified with amino groups.

## Experimental Example 8: Evaluation of Dispersibility

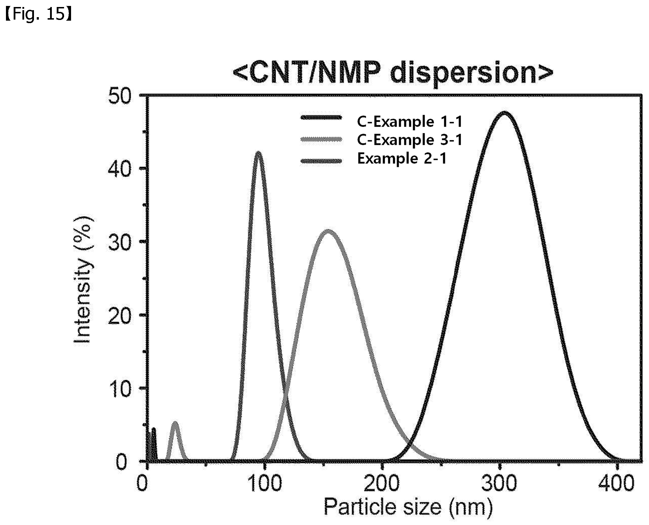

The dispersibility of the carbon nanotubes according to an embodiment of the present invention and a comparative example was evaluated by measuring Dynamic Light Scattering (DLS). The carbon nanotubes of Example 2-1, Comparative Example 1-1, and 3-1 were ultrasonically dispersed in methylpyrrolidone (NMP) at a concentration of 0.025 wt% for 24 hours, then diluted to 0.00025 wt% to measure DLS. Thereafter, to forcibly separate the carbon nanotubes and NMP of Example 2-1, Comparative Example 1-1, and 3-1, centrifugation was performed at 1000 to 1200 rpm, and the results are shown in FIGS. 15 to 17.

Referring to FIG. 15, it can be confirmed that the amino group-modified carbon nanotubes of Example 2-1 have only two peaks near about 5 nm and 100 nm, confirming that the amino group-modified carbon nanotubes of Example 2-1 were completely dispersed in a polar solvent. On the other hand, in FIG. 15, it can be confirmed that two peaks exist near about 10 nm and about 320 nm for the carbon nanotubes of Comparative Example 1-1, and near about 30 nm and about 260 nm for the carboxyl group-modified carbon nanotubes of Comparative Example 3-1. This means that an aggregation phenomenon occurs in a polar solvent due to Van der Waals forces and pi-pi stacking acting between hydrophobic carbon nanotubes.

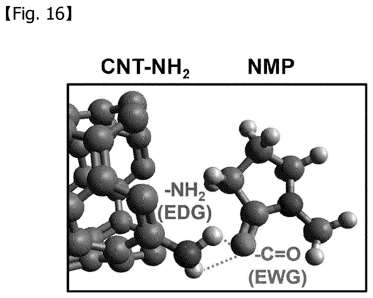

Referring to FIG. 16, the amino group of the amino group-modified carbon nanotubes of Example 2-1 acts as an Electron Donating Group (EDG), and the carbonyl group in the NMP solvent acts as an Electron Withdrawing Group (EWG), meaning that the dispersibility of the solvent was improved due to interaction between them. On the other hand, the carboxyl group of the carboxyl group-modified carbon nanotubes of Comparative Example 3-1 acts as an Electron Withdrawing Group (EWG), which conflicts with the EWG of the carbonyl group in the NMP solvent, meaning that dispersibility was decreased.

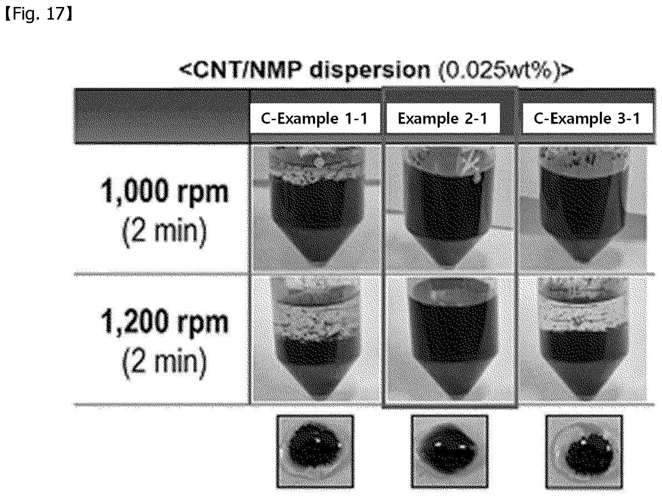

Referring to FIG. 17, the amino group-modified carbon nanotubes of Example 2-1 exhibited excellent dispersibility in the NMP solvent even after centrifugation at 1000 rpm and 1200 rpm. On the other hand, for the carbon nanotubes of Comparative Example 1-1, it was confirmed that the carbon nanotubes sank when centrifuged at 1000 rpm and 1200 rpm for 2 minutes, and for the carboxyl group-modified carbon nanotubes of Comparative Example 3-1, the carbon nanotubes sank when centrifuged at 1200 rpm. This means that the carbon nanotubes of Comparative Examples 1-1 and 3-1 do not have excellent dispersibility in polar solvents.

**Experimental Example 9: Evaluation of Electrochemical Characteristics of Coin Cell**

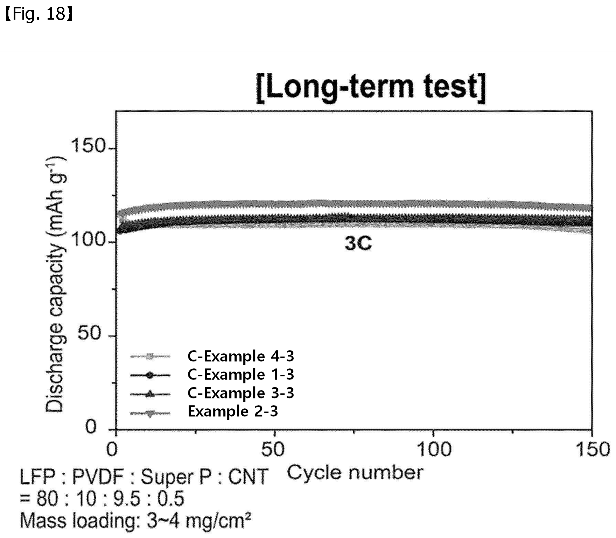

The electrochemical characteristics of coin cells according to an embodiment of the present invention and a comparative example were evaluated. The electrochemical performance was tested using a multi-channel potentiostat/galvanostat (WMPG 1000, WonAtech). The GCD test of the coin cell was performed at various C-rates (1C = 170 mAh/g) of 2.5-4.0 V vs. Li/Li$^+$. Electrochemical impedance spectroscopy (EIS) was measured using a potentiostat/galvanostat (VMP3, Bio-Logic, France), and the results are shown in FIGS. 18 to 22.

FIG. 18 shows the capacity change when charge/discharge was repeated 150 times for the coin cells of Example 2-3 and Comparative Examples 1-3, 3-3, and 4-3. It can be confirmed that the coin cell of Example 2-3, in which the amino group-modified carbon nanotubes are uniformly distributed, showed the best capacity in long-term cycle repetitions.

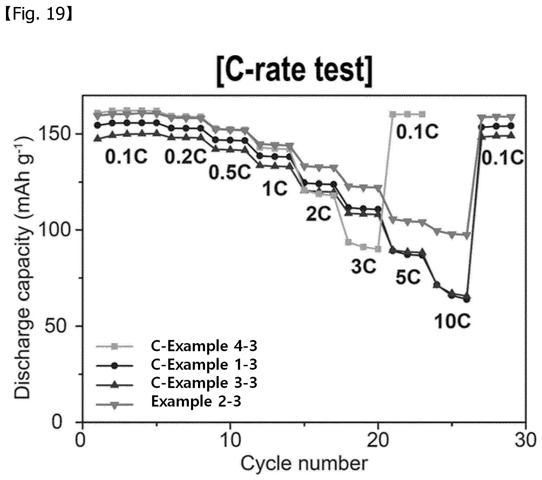

FIG. 19 shows the capacity change according to the rate performance difference of the coin cells of Example 2-3 and Comparative Examples 1-3, 3-3, and 4-3. Referring to FIG. 19, compared to the coin cells of Comparative Examples 4-3 and 1-3, the coin cell of Example 2-3 showed an improved capacity of about 10 mAh/g at 3C and about 20 mAh/g at 5C. Also, at an ultra-high rate of 10C, an improved capacity of about 100 mAh/g compared to the coin cell of Comparative Example 4-3 and about 30 mAh/g compared to Comparative Example 1-3 was shown. These results mean that the electrode slurry composition including amino group-modified carbon nanotubes has excellent dispersibility, and it can be confirmed that the amino group-modified carbon nanotubes of Example 2-1 are uniformly distributed in the coin cell, showing the best capacity in high-rate charge/discharge.

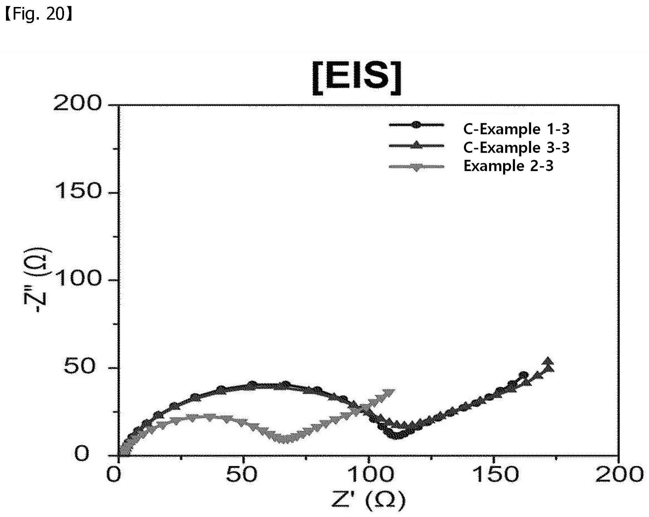

Referring to FIG. 20, as a result of EIS measurement of the coin cells of Example 2-3 and Comparative Examples 1-3 and 3-3, the coin cells of Comparative Examples 1-3 and 3-3 showed a high charge transfer resistance (RCT) of 110 Ω or more. However, the coin cell using the amino group-modified carbon nanotubes of Example 2-3 showed a low RCT of about 67 Ω. This means that when the dispersibility of carbon nanotubes is excellent, charge transfer at the electrode-electrolyte interface is promoted, thereby improving the capacity manifestation and rate performance of the battery.

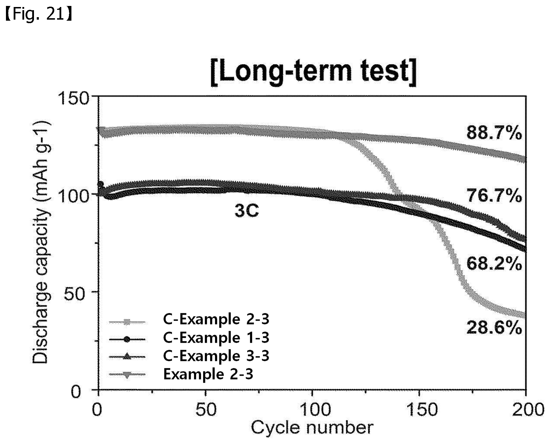

FIG. 21 shows the capacity change when charge/discharge was repeated 200 times for the coin cells of Example 2-3 and Comparative Examples 1-3, 2-3, and 3-3. Referring to FIG. 21, it can be confirmed that the capacity of the coin cell of Comparative Example 2-3 including single-walled carbon nanotubes decreased sharply after 100 charge/discharge cycles. On the other hand, the coin cell of Example 2-3 including amino group-modified multi-walled carbon nanotubes showed a capacity retention of 88.7% after 200 charge/discharge cycles, confirming that the cycle life was superior to that of Comparative Example 2-3 including single-walled carbon nanotubes.

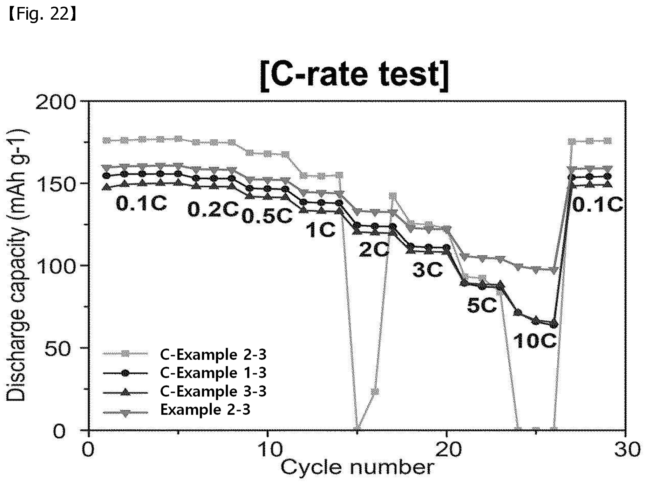

FIG. 22 shows the capacity change according to the rate performance difference of the coin cells of Example 2-3 and Comparative Examples 1-3, 2-3, and 3-3. Referring to FIG. 22, the coin cell of Comparative Example 2-3 including single-walled carbon nanotubes showed the highest capacity in low-rate charge/discharge (0.1 to 3.0C), but showed a lower capacity compared to the coin cell of Example 2-3 in high-rate charge/discharge (0.1 to 3.0C). Also, in terms of ultra-high rate performance, the coin cell of Example 2-3 showed a capacity about 25 mAh/g higher at 5C and about 100 mAh/g higher at 10C compared to Comparative Example 2-3. Thus, the amino group-modified carbon nanotubes have excellent dispersibility in NMP even without a dispersant, and it can be confirmed that the effect of improving the rate performance of the coin cell of Example 2-3 is superior compared to the coin cell of Comparative Example 2-3 including single-walled carbon nanotubes.

Although preferred embodiments of the present invention have been described above, the present invention is not limited thereto, and various modifications can be made within the scope of the patent claims, the detailed description of the invention, and the accompanying drawings, which also fall within the scope of the present invention.

Therefore, the substantial scope of the present invention will be defined by the appended claims and their equivalents.

**Claims**

1.  A method for modifying wettability of a carbon allotrope, comprising: preparing a carbon allotrope; preparing a solvent capable of inducing generation of a hydrophilic radical or a hydrophobic radical; contacting the carbon allotrope with the solvent; supplying energy to the solvent using an energy source; and generating a hydrophilic radical or a hydrophobic radical from the solvent through the energy supplied to the solvent, such that the generated radical is bonded to an end of the carbon allotrope.

2.  The method for modifying wettability of a carbon allotrope of claim 1, wherein the carbon allotrope consists of $sp^2$ hybridized bonded carbon.

3.  The method for modifying wettability of a carbon allotrope of claim 1, wherein the step of preparing the carbon allotrope comprises coating the carbon allotrope on a porous foam and drying the carbon allotrope coated on the porous foam.

4.  The method for modifying wettability of a carbon allotrope of claim 1, wherein the energy source is at least one energy source selected from microwaves, electric fields, and plasma.

5.  The method for modifying wettability of a carbon allotrope of claim 1, wherein the solvent capable of inducing generation of a hydrophilic radical includes a solvent capable of generating a polar radical.

6.  The method for modifying wettability of a carbon allotrope of claim 1, wherein the solvent capable of inducing generation of a hydrophobic radical includes a solvent capable of generating a non-polar radical.

7.  The method for modifying wettability of a carbon allotrope of claim 1, wherein: the solvent capable of inducing generation of a hydrophilic radical is a solvent having a hydroxyl group; and the solvent capable of inducing generation of a hydrophobic radical is a solvent having a methyl group or a benzyl group.

8.  The method for modifying wettability of a carbon allotrope of claim 1, wherein: the solvent capable of inducing generation of a hydrophilic radical is water, hydrogen peroxide, or a combination thereof; and the solvent capable of inducing generation of a hydrophobic radical is acetone, toluene, or a combination thereof.

9.  The method for modifying wettability of a carbon allotrope of claim 1, wherein, when the solvent is a solvent capable of inducing generation of a hydrophilic radical, an energy supply time for the step of supplying energy to the solvent using an energy source is several minutes or less.

10. The method for modifying wettability of a carbon allotrope of claim 1, wherein the step of bonding the generated radical to the end of the carbon allotrope is performed under at least one inert gas selected from the group consisting of argon, helium, xenon, krypton, and neon.

11. The method for modifying wettability of a carbon allotrope of claim 1, wherein, when the solvent is a solvent capable of inducing generation of a hydrophobic radical, an energy supply time for the step of supplying energy to the solvent using an energy source is several minutes or less.

12. The method for modifying wettability of a carbon allotrope of claim 1, wherein the step of supplying energy to the solvent using an energy source is capable of controlling a degree of a water contact angle (WCA) according to an energy supply time.

13. The method for modifying wettability of a carbon allotrope of claim 3, wherein the porous foam includes at least one porous foam selected from the group consisting of melamine foam, polyurethane foam, nickel foam, a scouring pad, and natural foam.

14. The method for modifying wettability of a carbon allotrope of claim 1, wherein the carbon allotrope is one or more selected from single-walled carbon nanotubes, multi-walled carbon nanotubes, carbon nanofibers, graphene oxide, and two-dimensional graphene.

15. The method for modifying wettability of a carbon allotrope of claim 1, wherein a water contact angle (WCA) is 110° or more when the hydrophobic radical is bonded to the end of the carbon allotrope.

16. The method for modifying wettability of a carbon allotrope of claim 1, wherein a water contact angle (WCA) is 50° or less when the hydrophilic radical is bonded to the end of the carbon allotrope.

17. A method for modifying wettability of a carbon allotrope, comprising: preparing a carbon allotrope; preparing a solvent capable of inducing generation of a hydrophilic radical; contacting the carbon allotrope with the solvent; supplying energy to the solvent using an energy source; generating a hydrophilic radical in the solvent through the energy supplied to the solvent; and obtaining a carbon allotrope modified with a hydrophilic group by bonding the hydrophilic radical to an end of the carbon allotrope.

18. The method for modifying wettability of a carbon allotrope of claim 17, wherein the step of generating a hydrophilic radical in the solvent through the energy supplied to the solvent comprises: generating an amino radical in the solvent through the energy supplied to the solvent; and obtaining a carbon allotrope modified with an amino group by bonding the amino radical to the end of the carbon allotrope.

19. The method for modifying wettability of a carbon allotrope of claim 18, wherein a content of the amino group in the modified carbon allotrope is 1 to 7 wt% based on the total weight of the carbon allotrope.

20. The method for modifying wettability of a carbon allotrope of claim 17, wherein an energy supply time for the step of supplying energy is several minutes or less.

21. The method for modifying wettability of a carbon allotrope of claim 18, wherein the solvent capable of inducing generation of an amino radical comprises a first solvent having a hydroxyl group and a second solvent having an amino group.

22. The method for modifying wettability of a carbon allotrope of claim 21, wherein the first solvent is hydrogen peroxide or water, and the second solvent is urea or melamine.

23. The method for modifying wettability of a carbon allotrope of claim 18, wherein the solvent capable of inducing generation of an amino radical is hydrogen peroxide and urea.

24. The method for modifying wettability of a carbon allotrope of claim 23, wherein the hydrogen peroxide and the urea are mixed in a ratio of 1:1 to 1:4.

25. The method for modifying wettability of a carbon allotrope of claim 17, wherein the carbon allotrope includes single-walled carbon nanotubes, multi-walled carbon nanotubes, carbon nanofibers, graphene, or graphene oxide.

26. A method for modifying wettability of a carbon allotrope, comprising: contacting a carbon allotrope exhibiting hydrophilicity by having a hydrophilic substituent located at an end of the carbon allotrope with a solvent capable of inducing generation of a hydrophobic radical; supplying energy to the solvent using an energy source; and converting the carbon allotrope exhibiting hydrophilicity into a carbon allotrope exhibiting hydrophobicity through the energy supplied to the solvent.

27. The method for modifying wettability of a carbon allotrope of claim 25, wherein an energy supply time for the step of converting the carbon allotrope exhibiting hydrophilicity into a carbon allotrope exhibiting hydrophobicity is several minutes or less.

28. The method for modifying wettability of a carbon allotrope of claim 25, wherein the energy source is at least one energy source selected from microwaves, electric fields, and plasma.

29. A method for modifying wettability of a carbon allotrope, comprising: contacting a carbon allotrope exhibiting hydrophobicity by having a hydrophobic substituent located at an end of the carbon allotrope with a solvent capable of inducing generation of a hydrophilic radical; supplying energy to the solvent using an energy source; and converting the carbon allotrope exhibiting hydrophobicity into a carbon allotrope exhibiting hydrophilicity through the energy supplied to the solvent.

30. The method for modifying wettability of a carbon allotrope of claim 29, wherein an energy supply time for the step of converting the carbon allotrope exhibiting hydrophobicity into a carbon allotrope exhibiting hydrophilicity is several minutes or less.

31. The method for modifying wettability of a carbon allotrope of claim 29, wherein the energy source is at least one energy source selected from microwaves, electric fields, and plasma.

32. A wettability-modified carbon allotrope exhibiting hydrophobicity by having a hydrophobic substituent located at an end of the carbon allotrope.

33. The wettability-modified carbon allotrope of claim 32, wherein a water contact angle (WCA) is 110° or more.

34. A wettability-modified carbon allotrope exhibiting hydrophilicity by having a hydrophilic substituent located at an end of the carbon allotrope.

35. The wettability-modified carbon allotrope of claim 34, wherein a water contact angle (WCA) is 50° or less.

36. A wettability-modified carbon allotrope, **characterized in that** an amino group is bonded to an end of the carbon allotrope.

37. The wettability-modified carbon allotrope of claim 36, **characterized in that** an FT-IR spectrum of the modified carbon allotrope includes absorption regions in wavelength bands of 1120 cm$^{-1}$ and 3400 cm$^{-1}$.

38. The wettability-modified carbon allotrope of claim 36, wherein a size of particles of the modified carbon allotrope is 50 to 200 nm.

39. The wettability-modified carbon allotrope of claim 36, wherein a water contact angle (WCA) of the modified carbon allotrope is 50° or less.

40. The wettability-modified carbon allotrope of claim 36, wherein the carbon allotrope consists of sp$^2$ hybridized bonded carbon.

41. The wettability-modified carbon allotrope of claim 36, wherein the carbon allotrope is one or more selected from single-walled carbon nanotubes, multi-walled carbon nanotubes, carbon nanofibers, graphene oxide, and two-dimensional graphene.

【Fig. 1】

【Fig. 2】

**a** [Acetone-mediated superhydrophobicity]

**b** [Water-mediated superhydrophilicity]

【Fig. 3】

[Reversible wettability switching]

【Fig. 4】

【Fig. 5】

【Fig. 6】

【Fig. 7】

【Fig. 8】

【Fig. 9】

【Fig. 10】

【Fig. 11】

【Fig. 12】

【Fig. 13】

【Fig. 14】

**N-H & C-N** bonding formation

【Fig. 15】

【Fig. 16】

【Fig. 17】

【Fig. 18】

【Fig. 19】

【Fig. 20】

【Fig. 21】

【Fig. 22】

## INTERNATIONAL SEARCH REPORT

| International application No. |
|---|
| **PCT/KR2024/014223** |

| A. | CLASSIFICATION OF SUBJECT MATTER |
|---|---|

**C01B 32/168**(2017.01)i; **C01B 32/174**(2017.01)i; **H01M 4/62**(2006.01)i; **C01B 32/194**(2017.01)i; **H01G 11/32**(2013.01)i; **H01G 11/26**(2013.01)i; **H01G 11/86**(2013.01)i; **H01G 11/58**(2013.01)i

According to International Patent Classification (IPC) or to both national classification and IPC

| B. | FIELDS SEARCHED |
|---|---|

Minimum documentation searched (classification system followed by classification symbols)

C01B 32/168(2017.01); B01J 19/12(2006.01); C01B 31/02(2006.01); C01B 32/156(2017.01); C01B 32/192(2017.01); C01B 32/198(2017.01); C08J 9/40(2006.01); C08J 9/42(2006.01); C25B 1/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소 동소체(carbon allotropes), 탄소 나노튜브(carbon nanotube, CNT), 그래핀 옥사이드(graphene oxide), 친수성 라디칼(hydrophilic radical), 소수성 라디칼(hydrophobic radical), 개질(modification), 마이크로파(microwave), 플라즈마(plasma), 전기장(electric field), 용매(solvent), 수산기(hydroxyl group), 메틸기(methly group), 벤질기(benzyl group), 아미노기(amino group)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0103476 A (PUSAN NATIONAL UNIVERSITY INDUSTRY-UNIVERSITY COOPERATION FOUNDATION) 07 July 2023 (2023-07-07)<br>See claims 1-7; and paragraphs [0009]-[0015]. | 1,2,4,5,7-10,14,<br>17-20,25,29-31<br>,34,36-38,40,41 |
| Y | | 3,12,13,16,35,39 |
| A | | 6,11,15,21-24,<br>26-28,32,33 |
| Y | CN 106397825 A (JIANGSU GAIMU NANO MATERIAL TECHNOLOGY CO., LTD.) 15 February 2017 (2017-02-15)<br>See claim 1. | 3,13 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 December 2024** | **01 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/014223** |

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0095749 A (KOREA ATOMIC ENERGY RESEARCH INSTITUTE) 07 July 2022 (2022-07-07)<br>See claims 1-18. | 12,16,35,39 |
| A | KR 10-2018-0061087 A (THE REGENTS OF THE UNIVERSITY OF CALIFORNIA) 07 June 2018 (2018-06-07)<br>See claims 1-18. | 1-41 |
| A | KR 10-1626561 B1 (KOREA INSTITUTE OF SCIENCE AND TECHNOLOGY) 03 June 2016 (2016-06-03)<br>See claims 1-8. | 1-41 |

Form PCT/ISA/210 (second sheet) (July 2022)

**INTERNATIONAL SEARCH REPORT**
Information on patent family members

International application No.

**PCT/KR2024/014223**

| Patent document cited in search report | | | Publication date (day/month/year) | Patent family member(s) | | | Publication date (day/month/year) |
|---|---|---|---|---|---|---|---|
| KR | 10-2023-0103476 | A | 07 July 2023 | KR | 10-2724731 | B1 | 31 October 2024 |
| CN | 106397825 | A | 15 February 2017 | CN | 106397825 | B | 25 October 2019 |
| KR | 10-2022-0095749 | A | 07 July 2022 | KR | 10-2530207 | B1 | 10 May 2023 |
| KR | 10-2018-0061087 | A | 07 June 2018 | CA | 2986897 | A1 | 01 December 2016 |
| | | | | CN | 107735360 | A | 23 February 2018 |
| | | | | CN | 107735360 | B | 28 January 2022 |
| | | | | EA | 201792363 | A1 | 29 June 2018 |
| | | | | EP | 3303219 | A1 | 11 April 2018 |
| | | | | EP | 3303219 | A4 | 09 January 2019 |
| | | | | HK | 1252745 | A1 | 31 May 2019 |
| | | | | JP | 2018-524249 | A | 30 August 2018 |
| | | | | JP | 7101959 | B2 | 19 July 2022 |
| | | | | MX | 2017015130 | A | 01 August 2018 |
| | | | | US | 10689537 | B2 | 23 June 2020 |
| | | | | US | 2018-0142114 | A1 | 24 May 2018 |
| | | | | WO | 2016-191564 | A1 | 01 December 2016 |
| KR | 10-1626561 | B1 | 03 June 2016 | KR | 10-2015-0081592 | A | 15 July 2015 |

Form PCT/ISA/210 (patent family annex) (July 2022)